(19) **Europäisches Patentamt European Patent Office Office européen des brevets**

(11) **EP 4 195 575 A1**

(12) **EUROPEAN PATENT APPLICATION**
published in accordance with Art. 153(4) EPC

(43) Date of publication:
**14.06.2023 Bulletin 2023/24**

(21) Application number: **21854083.9**

(22) Date of filing: **06.08.2021**

(51) International Patent Classification (IPC):
$H04L\ 5/16^{(2006.01)}$ $\qquad$ $H04L\ 5/00^{(2006.01)}$
$H04L\ 27/26^{(2006.01)}$ $\qquad$ $H04W\ 72/04^{(2023.01)}$
$H04W\ 88/02^{(2009.01)}$

(52) Cooperative Patent Classification (CPC):
**H04L 5/00; H04L 5/16; H04L 27/26; H04W 72/04; H04W 88/02;** Y02D 30/70

(86) International application number:
**PCT/KR2021/010419**

(87) International publication number:
**WO 2022/031113 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2020 KR 20200098839**
**06.04.2021 US 202163171107 P**
**11.05.2021 KR 20210060829**

(71) Applicant: **LG Electronics, Inc.**
**Yeongdeungpo-gu**
**Seoul 07336 (KR)**

(72) Inventors:
• **KIM, Jaehyung**
**Seoul 06772 (KR)**
• **YANG, Suckchel**
**Seoul 06772 (KR)**
• **KIM, Seonwook**
**Seoul 06772 (KR)**

(74) Representative: **Plasseraud IP**
**66, rue de la Chaussée d'Antin**
**75440 Paris Cedex 09 (FR)**

(54) **METHOD FOR TRANSMITTING OR RECEIVING DATA IN WIRELESS COMMUNICATION SYSTEM SUPPORTING HALF-DUPLEX FREQUENCY DIVISION DUPLEXING, AND DEVICE THEREFOR**

(57) The present disclosure discloses a method for transmitting or receiving data in a wireless communication system supporting half-duplex frequency division duplexing, and a device supporting same. The method may comprise the steps of: receiving configuration information through higher-layer signaling; receiving downlink control information (DCI), wherein (i) first time duration in which first data is transferred in a first direction, and (ii) second time duration in which second data is transferred in a second direction opposite from the first direction are configured on the basis of at least one of the configuration information and the DCI; and performing switching from the first time duration into the second time duration on the basis that the first direction and the second direction are opposite from each other, wherein priorities of the first data and the second data are determined on the basis of a predefined rule, and a guard period necessary for the switching is included in time duration in which data having a lower priority is transferred, among the first time duration and the second time duration.

[FIG. 8]

**Description**

[Technical Field]

The present disclosure relates to a wireless communication system, and more particularly, to a method for transmitting or receiving data based on half-duplex frequency division duplexing, and a device supporting the same.

[Background Art]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

[Disclosure]

[Technical Problem]

The present disclosure proposes a method for transmitting or receiving data in a wireless communication system supporting half-duplex frequency division duplexing (FDD).

Specifically, the present disclosure proposes a method for configuring a slot format for a half-duplex FDD operation, and configuring/defining a switching time for switching to downlink to uplink or switching from uplink to downlink.

Furthermore, the present disclosure proposes a method for configuring a guard period for switching to downlink to uplink or switching from uplink to downlink for the half-duplex FDD operation.

Furthermore, the present disclosure proposes methods for preventing a link-direction collision in the half-duplex FDD operation.

Technical objects to be achieved in the disclosure are not limited to the aforementioned technical objects, and other technical objects not described above may be evidently understood by a person having ordinary skill in the art to which the disclosure pertains from the following description.

[Technical Solution]

A method of transmitting and receiving data by a user equipment (UE) in a wireless communication system supporting half-duplex frequency division duplexing according to an embodiment of the present disclosure may include: receiving configuration information through higher-layer signaling; receiving downlink control information (DCI), in which (i) first time duration in which first data is transferred in a first direction, and (ii) second time duration in which second data is transferred in a second direction opposite from the first direction are configured based on at least one of the configuration information or the DCI; and performing switching from the first time duration to the second time duration based on that the first direction and the second direction are opposite from each other, in which priorities of the first data and the second data may be determined based on a predefined rule, and a guard period required for the switching may be included in time duration in which data having a lower priority is transferred, among the first time duration or the second time duration.

Furthermore, in the method according to an embodiment of the present disclosure, the predefined rule may be related to a type of information for scheduling the second data, the second data may be determined to have a higher priority than the first data based on the second data being scheduled by the DCI, and the guard period may be included in the first time duration.

Furthermore, in the method according to an embodiment of the present disclosure, the predefined rule may be related to at least one type of the first data or the second data.

Furthermore, in the method according to an embodiment of the present disclosure, the guard period may be included in the first time duration based on the second data being a physical random access channel (PRACH) preamble, and the first data may not be received during the guard period included in the first time duration.

Furthermore, in the method according to an embodiment of the present disclosure, based on the first data being a synchronization signal block (SSB) and the second data being the PRACH preamble, the guard period may be located after a last symbol in which the SSB is received in the first time duration.

Furthermore, in the method according to an embodiment of the present disclosure, the guard period may be included in the second time duration based on the first data being the SSB, and the second data may not be transmitted before the guard period included in the second time duration after receiving the SSB is terminated.

Furthermore, in the method according to an embodiment of the present disclosure, the configuration information may include information related to the guard period.

Furthermore, in the method according to an embodiment of the present disclosure, the guard period may be configured i) for each SCS or ii) for each frequency range based on the information related to the guard period.

Furthermore, in the method according to an embodiment of the present disclosure, a second value which is a guard period corresponding to another SCS may be determined based on a first value which is a guard period corresponding to a reference SCS, and a ratio of another SCS to the reference SCS may be equal to a ratio of the second value to the first value.

Furthermore, in the method according to an embodiment of the present disclosure, the guard period may include a switching time from the first time duration to the second time duration.

Furthermore, the method according to an embodiment of the present disclosure may further include transmitting capability information related to the switching time.

Furthermore, in the method according to an embodiment of the present disclosure, when the first direction is a downlink, the second direction may be an uplink, and when the first direction is the uplink, the second direction may be the downlink.

A user equipment (UE) transmitting and receiving data in a wireless communication system supporting half-duplex frequency division duplexing according to an embodiment of the present disclosure may include: one or more transceivers; one or more processors; and one or more memories storing instructions for operations executed by the one or more processors and connected to the one or more processors, in which the operations may include receiving configuration information through higher-layer signaling; receiving downlink control information (DCI), in which (i) first time duration in which first data is transferred in a first direction, and (ii) second time duration in which second data is transferred in a second direction opposite from the first direction are configured based on at least one of the configuration information or the DCI; and performing switching from the first time duration to the second time duration based on that the first direction and the second direction are opposite from each other, in which priorities of the first data and the second data may be determined based on a predefined rule, and a guard period necessary for the switching may be included in time duration in which data having a lower priority is transferred, among the first time duration or the second time duration.

In a device including: one or more memories and one or more processors functionally connected to the one or more memories, the one or more processors may be configured to control the device to receive configuration information through higher-layer signaling; receive downlink control information (DCI); and (i) first time duration in which first data is transferred in a first direction, and (ii) second time duration in which second data is transferred in a second direction opposite from the first direction are configured based on at least one of the configuration information or the DCI; and perform switching from the first time duration to the second time duration based on that the first direction and the second direction are opposite from each other, in which priorities of the first data and the second data are determined based on a predefined rule, and a guard period necessary for the switching is included in time duration in which data having a lower priority is transferred, among the first time duration or the second time duration.

In one or more non-transitory computer-readable media storing one or more instructions, the one or more instructions executable by one or more processors may include instructions for instructing a user equipment (UE) to: receive configuration information through higher-layer signaling; receive downlink control information (DCI); and wherein (i) first time duration in which first data is transferred in a first direction, and (ii) second time duration in which second data is transferred in a second direction opposite from the first direction are configured based on at least one of the configuration information or the DCI; and perform switching from the first time duration to the second time duration based on that the first direction and the second direction are opposite from each other, in which priorities of the first data and the second data may be determined based on a predefined rule, and a guard period necessary for the switching may be included in time duration in which data having a lower priority is transferred, among the first time duration or the second time duration.

A method of transmitting and receiving data by a base station in a wireless communication system supporting half-duplex frequency division duplexing according to an exemplary embodiment of the present disclosure may include: transmitting configuration information through higher-layer signaling; and transmitting downlink control information (DCI), in which (i) first time duration in which first data is transferred in a first direction, and (ii) second time duration in which second data is transferred in a second direction opposite from the first direction are configured based on at least one of the configuration information or the DCI; and switching from the first time duration to the second time duration is performed based on that the first direction and the second direction are opposite from each other, in which priorities of the first data and the second data may be determined based on a predefined rule, and a guard period necessary for the switching may be included in time duration in which data having a lower priority is transferred, among the first time duration or the second time duration.

A base station transmitting and receiving data in a wireless communication system supporting half-duplex frequency division duplexing according to an exemplary embodiment of the present disclosure may include: one or more transceivers; one or more processors; and one or more memories storing instructions for operations executed by the one or more processors and connected to the one or more processors, in which the operations may include transmitting configuration information through higher-layer signaling; and transmitting downlink control information (DCI), in which (i) first time duration in which first data is transferred in a first direction, and (ii) second time duration in which second data is transferred in a second direction opposite from the first direction are configured based on at least one of the configuration information or the DCI; and switching from the first time duration to the second time duration is performed based on that the first direction and the second direction are opposite from each other, in which priorities of the first data and the second data may be determined based on a predefined rule, and a guard period necessary for the switching may be included in time duration in which data having a lower priority is transferred, among the first time duration or the second time duration.

[Advantageous Effects]

According to an embodiment of the present disclosure, data can be transmitted or received in a wireless communication system supporting half-duplex frequency division duplexing (FDD).

Furthermore, according to an embodiment of the present disclosure, a slot format can be configured for a half-duplex FDD operation, and a switching time for switching to downlink to uplink or switching from uplink to downlink can be configured.

Furthermore, according to an embodiment of the present disclosure, a guard period for switching to downlink to uplink or switching from uplink to downlink can be configured for the half-duplex FDD operation.

Furthermore, according to an embodiment of the present disclosure, a link-direction collision can be prevented in the half-duplex FDD operation.

Effects which may be obtained from the disclosure are not limited by the above effects, and other effects that have not been mentioned may be clearly understood from the following description by those skilled in the art to which the disclosure pertains.

[Description of Drawings]

The accompany drawings, which are included to provide a further understanding of the disclosure and are incorporated on and constitute a part of this disclosure illustrate embodiments of the disclosure and together with the description serve to explain the principles of the disclosure.

FIG. 1 is a diagram illustrating an example of an overall system structure of NR to which a method proposed in the disclosure may be applied.

FIG. 2 illustrates a relationship between an uplink frame and a downlink frame in a wireless communication system to which a method proposed in the disclosure may be applied.

FIG. 3 illustrates an example of a frame structure in an NR system.

FIG. 4 illustrates an example of a resource grid supported by a wireless communication system to which a method proposed in the disclosure may be applied.

FIG. 5 illustrates examples of a resource grid for each antenna port and numerology to which a method proposed in the present disclosure may be applied.

FIG. 6 illustrates physical channels and general signal transmission used in a 3GPP system.

FIG. 7 illustrates an example of a signaling flowchart between a UE and a BS to which a method and/or an embodiment proposed in the present disclosure may be applied.

FIG. 8 illustrates an example of an operation flowchart of a UE performing transmission or reception of data to which a method and/or an embodiment proposed in the present disclosure may be applied.

FIG. 9 illustrates a communication system (1) applied to the disclosure.

FIG. 10 illustrates a wireless device which may be applied to the disclosure.

FIG. 11 illustrates a signal processing circuit for a transmit signal.

FIG. 12 illustrates another example of a wireless device applied to the disclosure.

FIG. 13 illustrates a portable device applied to the disclosure.

[Mode for Disclosure]

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the disclosure is described based on the 3GPP communication system (e.g., LTE-A or NR), but the technical spirit of the disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a detailed standard document number. The LTE/NR may be collectively referred to as the 3GPP system. Matters disclosed in a standard document opened before the disclosure may be referred to for a background art, terms, omissions, etc., used for describing the disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

## Overview of system

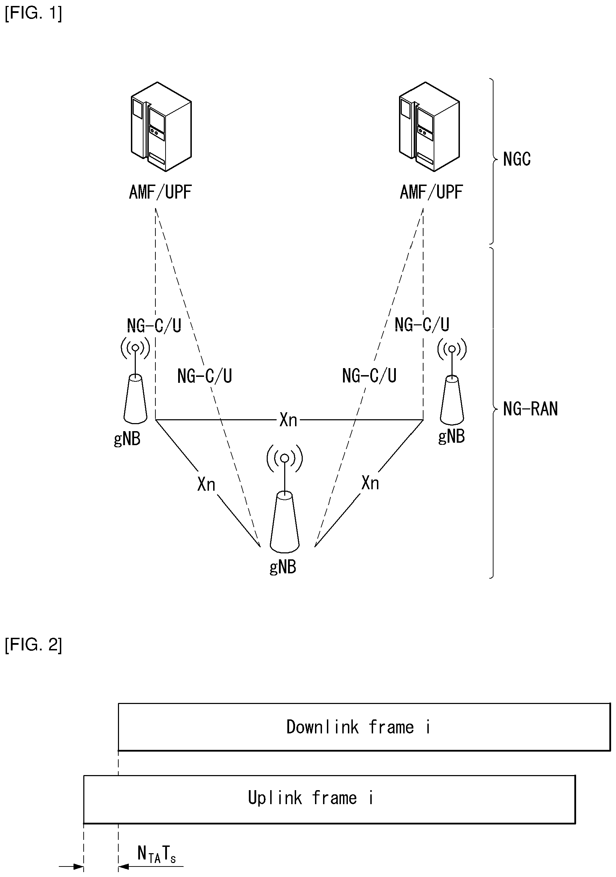

FIG. 1 illustrates an example of an overall structure of a NR system to which a method proposed in the disclosure is applicable..

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

**NR(New Rat) Numerology and frame structure**

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15\,[\text{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s$ = 10ms. The radio frame is composed of ten subframes each having a section of $T_{sf} = (\Delta f_{max} N_f/1000) \cdot T_s$ =1 ms. In this case, there may be a set of UL frames and a set of DL frames.

FIG. 2 illustrates a relation between an uplink frame and a downlink frame in a wireless communication system to which a method proposed in the disclosure is applicable.

As illustrated in FIG. 2, uplink frame number i for transmission from a user equipment (UE) shall start $T_{TA} = N_{TA}T_s$ before the start of a corresponding downlink frame at the corresponding UE.

Regarding the numerology $\mu$, slots are numbered in increasing order of $n_s^{\mu} \in \left\{0,...,N_{subframe}^{slots,\,\mu} - 1\right\}$ within a subframe and are numbered in increasing order of $n_{s,f}^{\mu} \in \left\{0,...,N_{frame}^{slots,\mu} - 1\right\}$ within a radio frame. One slot consists of consecutive OFDM symbols of $N_{symb}^{\mu}$, and $N_{symb}^{\mu}$ is determined depending on a numerology used and slot configuration. The start of slots $n_s^{\mu}$ in a subframe is aligned in time with the start of OFDM symbols $n_s^{\mu} N_{symb}^{\mu}$ in the same subframe.

Not all UEs are able to transmit and receive at the same time, and this means that not all OFDM symbols in a downlink slot or an uplink slot are available to be used.

Table 3 represents the number $N_{\text{symb}}^{\text{slot}}$ of OFDM symbols per slot, the number $N_{\text{slot}}^{\text{frame},\mu}$ of slots per radio frame, and the number $N_{\text{slot}}^{\text{subframe},\mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

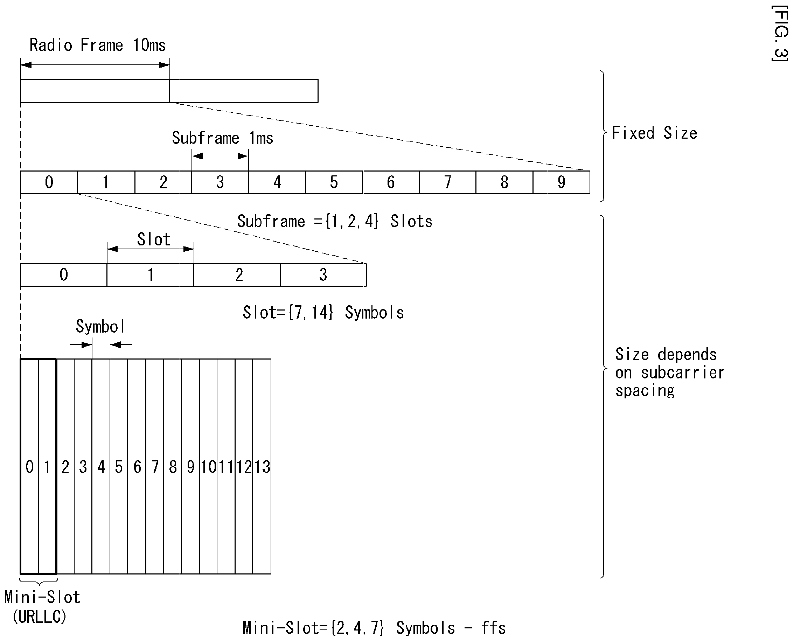

FIG. 3 illustrates an example of a frame structure in a NR system. FIG. 3 is merely for convenience of explanation and does not limit the scope of the disclosure.

In Table 4, in case of $\mu$ =2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

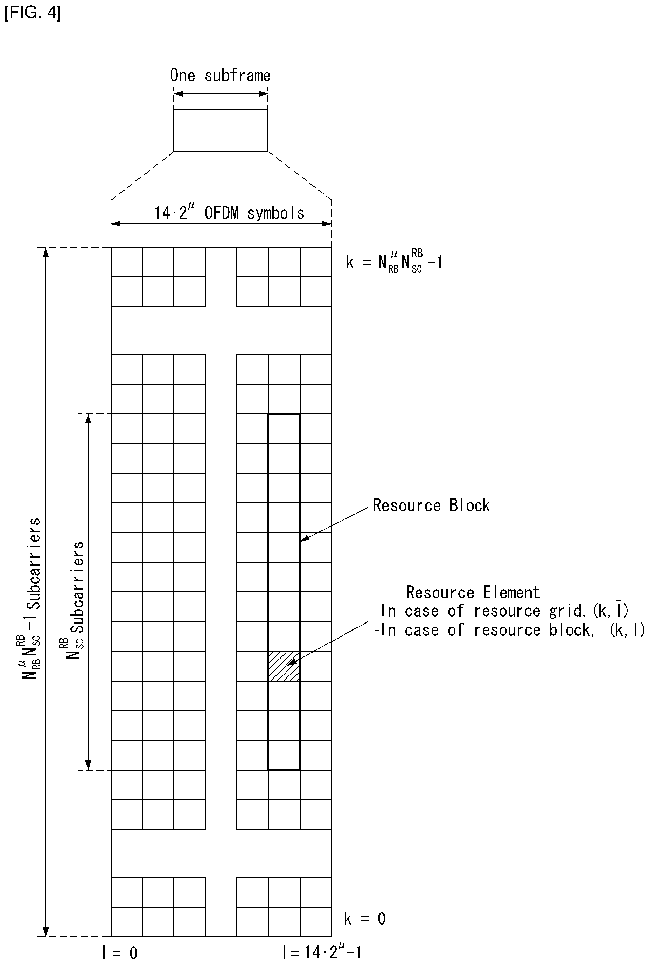

FIG. 4 illustrates an example of a resource grid supported in a wireless communication system to which a method proposed in the disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2\mu$ OFDM symbols, but the disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink.

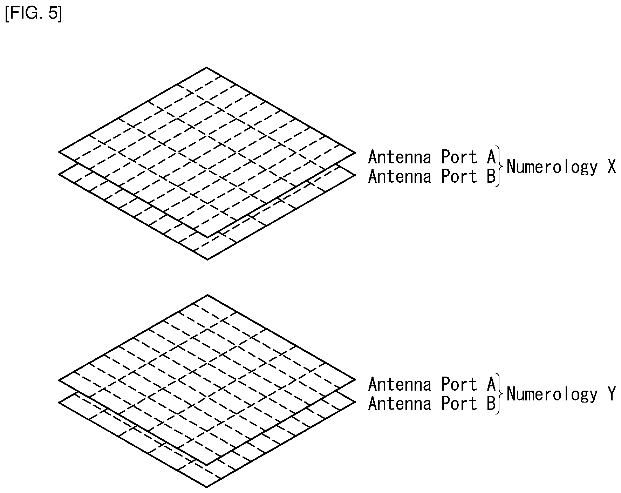

In this case, as illustrated in FIG. 5, one resource grid may be configured per numerology $\mu$ and antenna port p.

FIG. 5 illustrates examples of a resource grid per antenna port and numerology to which a method proposed in the disclosure is applicable.

Each element of the resource grid for the numerology $\mu$ and the antenna port p is called a resource element and is uniquely identified by an index pair ($k,\overline{l}$), where $k = 0,..., N_{\mathrm{RB}}^{\mu} N_{\mathrm{sc}}^{\mathrm{RB}} - 1$ is an index on a frequency domain, and $\overline{l} = 0,...,2^{\mu} N_{\mathrm{symb}}^{(\mu)} - 1$ refers to a location of a symbol in a subframe. The index pair ($k,l$) is used to refer to a resource element in a slot, where $l = 0,...,N_{\mathrm{symb}}^{\mu} - 1$.

The resource element ($k,\overline{l}$) for the numerology $\mu$ and the antenna port p corresponds to a complex value $a_{k,\overline{l}}^{(p,\mu)}$. When there is no risk for confusion or when a specific antenna port or numerology is not specified, the indices p and $\mu$ may be dropped, and as a result, the complex value may be $a_{k,\overline{l}}^{(p)}$ or $a_{k,\overline{l}}$.

Further, a physical resource block is defined as $N_{\mathrm{sc}}^{\mathrm{RB}} = 12$ consecutive subcarriers in the frequency domain.
Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$.
The center of subcarrier 0 of common resource block 0 for the subcarrier spacing configuration $\mu$ coincides with "point A". A common resource block number $n_{\mathrm{CRB}}^{\mu}$ in the frequency domain and resource elements (k, l) for the subcarrier spacing configuration $\mu$ may be given by the following Equation 1.

$$[\text{Equation 1}]$$

$$n_{\mathrm{CRB}}^{\mu} = \left\lfloor \frac{k}{N_{\mathrm{sc}}^{\mathrm{RB}}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\mathrm{BWP},i}^{\mathrm{size}} - 1$, where $i$ is No. Of the BWP. A relation between the physical resource block $n_{\mathrm{PRB}}$ in BWP $i$ and the common resource block $n_{\mathrm{CRB}}$ may be given by the following Equation 2.

$$[\text{Equation 2}]$$

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

**Bandwidth part (BWP)**

The NR system may support up to 400 MHz per carrier. If a UE which operates in wideband CC operates while continuously turning on a radio frequency (RF) module for all CCs, UE battery consumption may increase. Alternatively, when several use cases (e.g., eMBB, URLLC, mMTC, V2X, etc.) which operate in one wideband CC are considered, different numerologies (e.g., sub-carrier spacing) may be supported for each frequency band in the corresponding CC. Alternatively, a capability for the maximum bandwidth may vary for each UE. By considering, the BS may instruct the UE to operate only in a partial bandwidth other than an entire bandwidth of the wideband CC, and the partial bandwidth is referred to as bandwidth part (BWP). In the frequency domain, the BWP is a subset of contiguous common resource blocks defined for numerology $\mu i$ within bandwidth part i on the CC, and one numerology (e.g., a subcarrier spacing, a CP length, a slot/mini-slot duration) may be configured.

Meanwhile, the BS may configure one or more BWPs within one CC configured to the UE. Alternatively, when UEs are concentrated on a specific BWP, some UEs may be configured to other BWPs for load balancing. Alternatively, a partial spectrum of the entire bandwidth may be excluded and both BWPs may be configured even in the same slot by considering frequency domain inter-cell interference cancellation between neighboring cells. That is, the BS may configure at least one DL/UL BWP to UE associated with the wideband CC, and activate at least one DL/UL BWP (L1 signaling which is a physical layer control signal and an MAC control element (CE) which is an MAC layer control signal) among DL/UL BWP(s) configured at a specific time point, instruct to switch the at least one DL/UL BWP to another configured DL/UL BWP (by the L1 signaling, the MAC CE, or the RRC signaling), or configure a timer value to allow the UE to switch to the determined DL/UL BWP when a timer expires. The activated DL/UL BWP is particularly referred to as active DL/UL BWP. In a situation in which the UE is in an initial access process or before RRC connection of the UE is set up, the UE may not also receive the configuration for the DL/UL BWP. In such a situation, the DL/UL BWP assumed by the UE is referred to as initial active DL/UL BWP.

## Physical Channel and General Signal Transmission

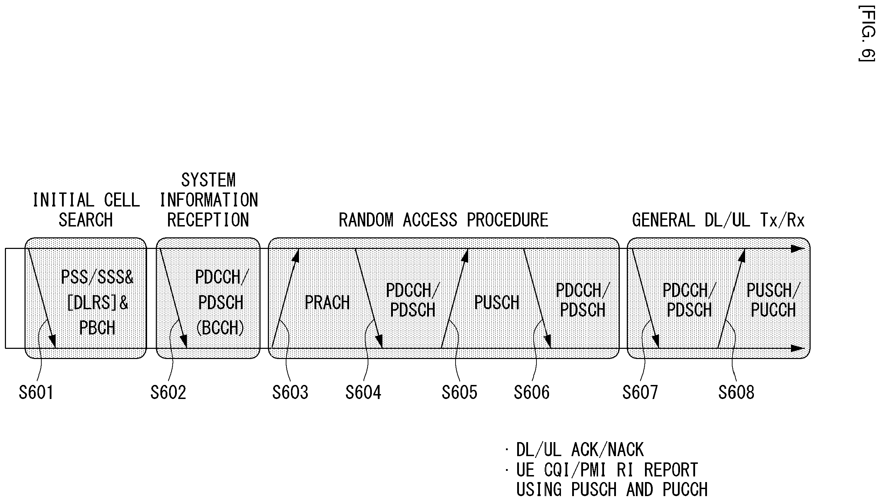

FIG. 6 illustrates physical channels and general signal transmission used in 3GPP systems. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Specifically, the UE monitors a set of PDCCH candidates in monitoring occasions configured in one or more control element sets (COREET) on a serving cell according to the search space configurations. The set of the PDCCH candidates to be monitored by the UE may be defined in terms of the search space sets, and the search space set may be a common search space set or a UE-specific search space set. The CORESET is constituted by a set of (physical) resource blocks having time duration of 1 to 3 OFDM symbols. The network may configure the UE to have a plurality of CORESETs. The UE monitors the PDCCH candidates the PDCCH candidates in one or more search space sets. Here, monitoring means attempting to decode the PDCCH candidate(s) in the search space. When the UE succeeds in decoding one of the PDCCH candidates in the search space, the UE determines that the PDCCH is detected in the PDCCH candidate and performs PDSCH reception or PUSCH transmission based on the DCI within the detected PDCCH.

The PDCCH may be used for scheduling DL transmission on the PDSCH and UL transmission on the PUSCH. Here, the DCI on the PDCCH includes downlink assignment at least including a modulation and coding format and resource allocation information, which is related to the PDSCH and uplink grant including the modulation and coding format, and the resource allocation information, which is related to the PUSCH. The format of the DCI varies depending on a use purpose of the DCI. For example, in the NR system, DCI format 0_0 and DCI format 0_1 are used for scheduling the PUSCH in one cell and DCI format 1_0 and DCI format 1_1 are used for scheduling the PDSCH in one cell. DCI format 2_0 may be CRC-scrambled by SFI-RNTI and is used for announcing a slot format.

The descriptions (e.g., 3GPP system, frame structure, physical channels, and general signal transmission) may be applied/used in combination with methods and/or embodiments proposed in the present disclosure or may be supplemented to clarify technical features of the methods proposed in the present disclosure. In the present disclosure, '/' may mean that all of the contents distinguished by / are included (and) or only some of the distinguished contents are included (or).

Further, in the present disclosure, abbreviated expressions may be used for the following terms for convenience of description.

- UE: User Equipment
- redcap UE: reduced capability UE
- SSB: Synchronization Signal Block
- BW: Bandwidth
- BWP: Bandwidth Part
- SCS: subcarrier spacing
- TB: Transport Block
- TDRA: Time domain resource allocation
- RO: RACH occasion
- MG: measurement gap
- DL: downlink
- UL: Uplink
- Rx: Reception
- Tx: Transmission
- FR: Frequency range
- PDCCH: Physical downlink control channel
- PDSCH: Physical downlink shared channel
- PUCCH: Physical uplink control channel
- PUSCH: Physical uplink shared channel
- RNTI: Radio Network Temporary Identifier
- RRC: Radio resource control
- MAC-CE: medium access control-control element
- DCI: Downlink control information
- FDD: Frequency division duplexing
- SI-RNTI: System Information Radio-Network Temporary Identifier
- CRC: Cyclic Redundancy Check
- SIB: System Information Block
- SIB1: SIB1 = Remaining Minimum System Information (RMSI) for the NR device. Information required for cell access of the NR device is broadcasted.
- CORESET (COntrol REsource SET): Time/frequency resource in which the NR UE attempts candidate PDCCH decoding
- CORESET#0: CORESET for Type0-PDCCH CSS set of the NR device
- MO: PDCCH monitoring occasion for Type0-PDCCH CSS set
- SIB1-R: (Additional) SIB1 for the NR device having a reduced capability. SIB1-R may be limited to a case where SIB1 is generated as separate TB and transmitted to separate PDSCH.
- CORESET#0-R: CORESET#0 for the NR devices having the reduced capability
- Type0-PDCCH-R CSS set: Search space set in which the reduced UE monitors the set of the PDCCH candidates for the DCI format CRC-scrambled by the SI-RNTI
- MO-R: PDCCH monitoring occasion for Type0-PDCCH-R CSS set
- RSA (Redcap standalone): Cell supporting only a Redcap device or Redcap service.

In addition to key use cases of the 5G described above, e.g., mMTC, eMBB, and URLLC, an importance/interest in use cases such as a use case in which mMTC and eMBB are combined or a use case in which mMTC and URLLC are combined increases. In order to efficiently support the use cases, methods for designing a UE suitable for the use cases are considered in terms of device cost, power consumption, a form factor, etc.

In the present disclosure, normal (NR) UEs supporting at least one of the key use cases of the 5G will be expressed as 'NR UE' or 'NR device'. The NR UE may have all 5G key capabilities (e.g., peak data rate, user experienced data rate, latency, mobility, connection density, energy efficiency, spectrum efficiency, and area traffic efficiency).

On the contrary, a UE which intentionally reduces some capabilities in order to achieve device cost reduction, power consumption saving, and a compact form factor will be referred to as (NR) reduced capability UE/reduced capability device, or abbreviated and referred to as (NR) 'redcap UE' or 'redcap device'. The redcap UE may be designed with the aim of a use case area across the mMTC and eMBB or mMTC and URLLC.

Further, in the present disclosure, for convenience of description, the 5G use case area across the mMTC and eMBB or mMTC and URLLC will be referred to as 'redcap use cases' for convenience.

As an example of the redcap use case, connected industry fields may be considered. Sensors and actuators may be connected to a 5G network and a core. Massive industrial wireless sensor network (IWSN) use cases and requirements may be included. In addition to URLLC in which a requirement is very high, comparative low-end services requiring a compact device form factor having a several-year battery lifespan may be provided. The requirements of the services are higher than Low Power Wide Area (LPWA) (i.e., LTE-M/NB-IOT), but lower than URLLC and eMBB. For example, a device supporting such an environment may include a pressure sensor, a humidity sensor, a thermometer, a motion sensor, an accelerometer, an actuator, etc.

As another example of the redcap use case, in the case of a smart city, smart city vertical more efficiently monitors and controls city resources, and covers data collection and processing for providing a service to urban residents. In particular, the deployment of surveillance cameras is a required part of the smart city and a required part even in a factory and an industry.

As yet another example of the redcap use case, wearable use cases may include a smart clock, a ring, a smart health (eHealth) related device, and a medical monitoring device.

It may be impossible to use the redcap use cases in terms of bit rate, latency, etc., by low power wireless area (LPWA) UEs (e.g., LTE-M, NB-IoT, etc.). On the contrary, the NR UE may functionally support the redcap use cases, but may be inefficient in terms of UE manufacturing cost, the form factor, a battery lifespan, etc. Supporting the redcap use case area in the 5G network by the redcap UE having characteristics such as low cost, low power, the compact form factor (i.e., the size of the device is small), etc., may achieve an effect of UE manufacturing and maintenance cost saving.

The redcap use cases have significantly diverse requirements in terms of UE complexity, target bit rate, latency, the power consumption, etc. In the present disclosure requirements which the redcap UE should satisfy will be referred to as 'redcap requirements'. The redcap requirements may be classified into generic requirements which may be commonly applied to all redcap use cases, and use case specific requirements applied only to some use case(s).

For example, the generic redcap requirements may be summarized as follows.

- Device complexity/cost: A key motivation of a new device type is to reduce device cost and complexity by comparing with high-end eMBB and URLLC devices of Rel-15/Rel-16. This is related particularly to an industrial sensor.
- Device size: Requirements for most use cases are to enable device design with the compact form factor which is a standard.
- Deployment scenario: The system should support all FR1/FR2 bands for FDD and TDD.

For example, the use case specific redcap requirements may be summarized as follows.

<Use case 1: Industrial wireless sensor>

- Reference bit rate: < 2 Mbps (UL traffic is latently heavy (heavy traffic))
- End-to-end latency: < 100 ms; ~ 5 to 10 ms for a safety related sensor
- Battery: At least several years
- Communication service availability: 99.99%
- Stationary

<Use case 2: Video surveillance>

- Reference bit rate: < 2 to 4 Mbps for economic video; ~7.5 to 25 Mbps for high-end video (UL traffic is heavy)
- Latency: < 500 ms
- Reliability: 99%-99.9%.

<Use case 3: Wearable>

- Reference bit rate: 10 to 50 Mbps in downlink and >= 5 Mbps in uplink for a smart wearable application

- Peak bit rate: 150 Mbps in downlink and 50 Mbps in uplink

- Battery: Several days (up to 1 to 2 weeks).

Table 5 illustrates schematic common requirements and use-specific requirements for three representative redcap use cases described above.

[Table 5]

| Use cases | Complexit y | Form factor | Bit rate (Mbps) | Latency (ms) | Mobility | Batter y |
|---|---|---|---|---|---|---|
| **Industrial Wireless Sensor** | Very low | Very small | A few | Tens of / A few [1] | Stationary | Years |
| **Video** | Low [2] | Small | A few / | Hundreds | Stationary | |
| **Surveillanc e** | | | Tens of | of | | |
| **Wearables** | Low [2] | Small | Tens of | | Mobile | Weeks |
| 1) Safety related sensors | | | | | | |
| 2) Low complexity compared to the normal NR device | | | | | | |

The redcap requirements may be satisfied by (a combination of) various features provided by the UE and the BS. The following is an example of features and sub-features supported by the UE/BS for satisfying the redcap requirements.

In terms of the complexity reduction of the redcap UE, the redcap UE may have, as the features, i) a decrease in number of Rx/Tx antennas of the UE, ii) a decrease in UE bandwidth, iii) half-duplex FDD supporting, iv) a released UE processing time, and v) a relaxed UE processing capability. Further, in terms of power saving, i) PDCCH monitoring may be reduced due to a limit of smaller number of blind decodings (BD) and a control channel element (CCE), ii) extended DRX for RRC inactive and/or idle may be applied, or iii) radio resource management (RRM) for a stationary device may be relaxed. Further, coverage recovery/enhancement may be provided as the feature.

Among the features of the redcap UE, half-duplex FDD is traditionally a method used in a low cost/low complexity UE. In the case of a full-duplex FDD UE which supports both transmission and reception, a duplexer should be used in order to eliminate an influence which interference generated from a transmission signal exerts on a reception signal, and a half-duplex FDD operation limits a simultaneous transmission/reception capability and replaces the duplexer for inference elimination with a low-cost radio frequency (RF) switch to reduce the UE cost.

In the present disclosure, the half-duplex FDD operation may be defined in LTE. In the half-duplex FDD operation, the UE may not simultaneously perform transmission and reception, but there is no limit in the full-duplex FDD.

Further, in LTE, two types of (e.g., type A and type B) half-duplex FDD operations are defined as follows.

In the case of type A half-duplex FDD operation, a guard period is generated as follows by the UE.

- A last part of a downlink subframe immediately before an uplink subframe is not received from the same UE.

In the case of type B half-duplex FDD operation, guard periods called half-duplex guard subframes, respectively are generated as follows by the UE.

- The downlink subframe immediately before the uplink subframe is not received from the same UE, and
- The downlink subframe immediately after the uplink subframe is not received from the same UE.

In the guard period, neither DL nor UL transmission occurs. The guard period may also be replaced with a term called guard time.

Hereinafter, the present disclosure proposes a method and/or embodiments for supporting the half-duplex FDD operation. Specifically, Proposal 1 proposes a method for configuring a slot format for a half-duplex FDD operation, and configuring/defining a switching time for switching to downlink to uplink or switching from uplink to downlink, and a method for configuring the guard period. Proposal 2 proposes methods for preventing the link-direction collision in the half-duplex FDD operation.

**<Proposal 1>**

The slot format indicates who each of symbols in one slot is used. Multiple slot formats may be predefined, and a specific slot format may be indicated/configured by a slot format index. In NR, each slot format may be constituted by at least one of a DL symbol, a UL symbol, or a flexible symbol. For example, there may be i) a slot format constituted only by the DL symbols, ii) a slot format constituted only by the UL symbols, or iii) a slot format constituted only by the flexible symbols. As another example, there may be i) a slot format constituted by the DL symbol(s) and the flexible symbol(s), ii) a slot format constituted by the UL symbol(s) and the flexible symbol(s), or iii) a slot format constituted by the DL symbol(s) and the UL symbol(s). As yet another example, there may be a slot format including all of the DL symbol(s), the UL symbol(s), and the flexible symbol(s).

For the half-duplex FDD operation, the BS may (i) semi-statically configure the UL carrier by a slot format constituted by UL only symbols or a combination of UL symbols and the flexible symbols and (ii) semi-statically configure the DL carrier by a slot format constituted by DL only symbols or a combination of the DL symbols and the flexible symbols through a common or dedicated RRC signaling. The method for semi-statically configuring the slot format through the common or dedicated RRC signaling may be similar to an existing method for configuring a TDD slot format through an RRC parameter 'tdd-UL-DL-ConfigurationCommon' or 'tdd-UL-DL-Configuration Common Dedicated'.

Alternatively, for the half-duplex FDD operation, the BS may constitute both the UL carrier and the DL carrier by the flexible symbols. For example, by a simple method for semi-statically constituting all of the slot formats by the flexible symbols, when a common or dedicated RRC parameter for a separate slot format configuration is not defined/indicated for each of the DL carrier or the UL carrier, the UE may regard that all slot formats of the carrier are constituted by the flexible symbols.

Based on the above-described method, the slot formats of the DL carrier and the UL carrier may be semi-statically configured. Based on the slot format configuration, the BS may basically support the half-duplex FDD operation by guaranteeing the half-duplex FDD UE not to require both transmission and reception through semi-static and/or dynamic scheduling through RRC and/or DCI signaling.

<Method 1>

In order to support the half-duplex FDD operation, a time required for switching A to B may be predefined. Hereinafter, for convenience of description, an operation of switching A to B will be expressed as 'A-to-B switching'. A data/signal transfer direction in A and a data/signal transfer direction in B may be opposite directions to each other. For example, when A is the downlink, B is the uplink, which may be expressed as 'DL-to-UL switching'. Alternatively, when A is the uplink, B is the downlink, which may be expressed as 'UL-to-DL switching'. A time required for switching A to B will be expressed as 'A-to-B switching'. Hereinafter, the downlink (DL) means communication from the BS to the UE and the uplink (UL) means communication from the UE to the BS. Further, in terms of the UE, DL RX means an operation of receiving a DL channel/signal from the BS and UL TX means an operation of transmitting a UL channel/signal to the BS.

A DL-to-UL switching time (e.g., $T_{DU}$) required by the UE supporting the half-duplex FDD may be predefined, and the UE may not expect to perform a DL Rx or UL Tx operation for the corresponding time.

For example, the DL-to-UL switching time $T_{DU}$ may be included in the DL symbol/slot before UL Tx, and the UE may not expect DL Rx for the corresponding time. That is, the UE may not receive DL Rx for the corresponding time. The BS may not perform DL transmission for the corresponding time.

For example, the DL-to-UL switching time $T_{DU}$ may be included in the UL symbol/slot before DL Tx, and the UE may not expect ULTx for the corresponding time. That is, in the case of a paired spectrum operation, a UE which may not perform full-duplex FDD communication may not expect to perform transmission in UL earlier than $T_{DU}$ after the end of the DL symbol received last. That is, the UE may not transmit UL for the corresponding time. The BS may not expect that UL Tx is received from the UE for the corresponding time.

Similarly, a UL-to-DL switching time (e.g., $T_{UD}$) required by the half-duplex FDD UE may be predefined, and the UE may not expect to perform the DL Rx or UL Tx operation for the corresponding time.

For example, the UL-to-DL switching time $T_{UD}$ may be included in the UL symbol/slot before DL Rx, and the UE may not expect UL Tx for the corresponding time. That is, the UE may not transmit UL for the corresponding time. The BS may not expect that UL Tx is received from the UE for the corresponding time.

For example, the UL-to-DL switching time $T_{UD}$ may be included in the DL symbol/slot before UL Tx, and the UE may not expect DL Rx for the corresponding time. That is, in the case of the paired spectrum operation, the UE which may not perform the full-duplex FDD communication may not expect to perform transmission in DL earlier than $T_{UD}$ after the end of the UL symbol received last.

Alternatively, in terms of the UE, when $T_{DU}$ and $T_{UD}$ are equal to or similar to each other ($T_{DU} \approx T_{UD}$), one representative value (e.g., $T_{SW}$) may be defined, and $T_{SW}$ may be replaced with $T_{DU} \cdot T_{UD}$.

The switching time T values (e.g., $T_{SW} \cdot T_{DU} \cdot T_{UD}$) may be defined as the unit of the time $T_C$ defined as below.

$T_c = 1/(\Delta f_{max} \cdot N_f)$ and, here, $\Delta f_{max} = 480 \cdot 10^3$ Hz and $N_f = 4096$. That is, $T_{DU}$, $T_{UD}$, and $T_{SW}$ may be defined as $N_{DU}T_C$, $N_{UD}T_C$, or $N_{SW}T_C$, respectively.

As in the above-described example, instead of predefining the DL-to-UL switching time or the UL-to-DL switching time as a fixed value, the switching time supported by the UE may be reported to the BS in the form of the UE capability (or capability information). For example, the UE may report the N value (i.e., $N_{DU}$, $N_{UD}$, or $N_{SW}$ value) to the BS through the capability information. Alternatively, a set of multiple N value(s) may be predefined (e.g., a table form), and the UE may report, to the BS, a specific N value(s) supported in the set of the N value(s). In this case, the UE reports a smallest switching time value to report all values equal to or larger than the smallest switching time value to the BS.

The BS may configure the switching time to the UE through the RRC parameter based on the UE capability reported by the UE. In this case, when there is no parameter (or when the parameter is not indicated/configured), the UE may assume a default switching time.

For example, the UE may assume a largest N value among multiple predefined N values as the default switching time. A reason for assuming the largest N value(s) as the default switching time is that all UEs operating in the half-duplex FDD operate by assuming the same N value(s) to avoid a case where BS scheduling is excessively complicated in a situation in which UEs supporting different switching times coexist.

As another example, the N value(s) which the UE reports being capable of supporting may be assumed as the default switching time. Alternatively, when the number of N value(s) which the UE reports being capable of supporting is multiple, a smallest N value(s) among the N values may be assumed as the default switching time.

The set of the multiple N value(s) may be distinguished by the switching time supported by the UE. For example, when two sets of the N value(s) is predefined, an N value(s) which is enabled to be supported by the low cost/low complexity UE (e.g., redcap UE) may be equal to or larger than the N value(s) supported by the high-cost/high complexity UE (e.g., NR UE), and it may be reported through the capability information that the high-cost/high-complexity UE supports both two sets of the N value(s).

For example, when $N_{DU}$ and $N_{UD}$ values are separately configured, each of the switching time for capability 1 and the switching time for capability 2 may be defined as two table forms. The high-cost/high-complexity UE may support both capability 1 and capability 2, and the low-cost/low-complexity UE may report supporting only capability 1 to the BS through the capability information. The high-cost/high-complexity UE may expect that the switching time is configured through the higher layer signaling by one value of the values of Tables 6 and 7. On the contrary, the low-cost/low-complexity UE may expect that the switching time is configured through the higher layer signaling only by the value of Table 6. That is, the low-cost/low-complexity UE may not expect that the switching time is configured by the value of Table 7.

Table 6 illustrates an example of the switching time $N_{DU}$ and $N_{UD}$ values for capability 1.

[Table 6]

| Switching time | FR1 | FR2 |
|---|---|---|
| $N_{DU}$ | 25600*2 | 13792*2 |
| $N_{UD}$ | 25600*2 | 13792*2 |

Table 7 illustrates an example of the switching time $N_{DU}$ and $N_{UD}$ values for capability 2.

[Table 7]

| Switching time | FR1 | FR2 |
|---|---|---|
| $N_{DU}$ | 25600 | 13792 |
| $N_{UD}$ | 25600 | 13792 |

Tables 6 and 7 are just an example for convenience of the description and do not limit the technical scope of the present disclosure. In Table 7 above, the values are just an example of values required primarily for RF circuit switching corresponding to 25600 * 1 / (480E3 * 4096)*1E6 = 13 us in FR1 (e.g., 410 MHz to 7125 MHz) and 13792 * 1 / (480E3 * 4096) * 1E6 = 7 us in FR2 (e.g., 24250 MHz to 52600 MHz).

Through Method 1 described above, in NR, the switching time required for A-to-B switching for supporting the half-duplex FDD operation may be configured and a minimum time required for the A-to-B switching may be secured.

<Method 2>

Method 2 proposes a method for defining/configuring the guard period in order to support the half-duplex FDD operation in NR. In the guard period, neither DL nor UL transmission occurs. The guard period may also be replaced with the term guard time. The switching time of Method 1 above may be included in the guard period.

The guard period may be defined as the unit of the symbol or the slot, and the UE may report information on the guard period to the BS as a capability information form. The guard period defined as the unit of the symbol may be defined as a guard symbol(s), and expressed as an OFDM symbol number (e.g., G_sym) used as the guard period. The guard period defined as the unit of the slot may be defined as a guard slot, and expressed as a slot number (e.g., G_slot) used as the guard period.

The guard period for type A half-duplex FDD operation may be defined as G_sym,A guide symbol(s).

Example 1-1) For type A half-duplex FDD operation, the guard period may be generated as follows by the UE.

- G_sym,A DL symbol(s) are not received from the same UE just before the UL slot.

Example 1-1 may be a case where the guard period is secured by defining the guard symbol(s) only for the case of the DL-to-UL switching and the BS secures the guard period through a timing advance (TA) configuration in the case of the UL-to-DL switching. Such a scheme may be an appropriate method in a case where a required guard period is small, i.e., a case such as type A.

Example 1-2) For type A half-duplex FDD operation, the guard period may be generated as follows by the UE.

- G_sym,A1 DL symbol(s) are not received from the same UE just before the UL slot, and
- G_sym,A2 DL symbol(s) are not received from the same UE just after the UL slot.

Example 1-2 is a case where the guard period is configured for both the DL-to-UL switching and the UL-to-DL switching. For example, Example 102 may be a case where since the required guard period (or switching time) is not small, it is difficult for the BS to secure a sufficient time for switching to the TA.

In the case of type B half-duplex FDD operation, an additional time for a frequency retuning operation is required due to the use of a single oscillator for low cost/low complexity, so a guard period value larger than type A may be generally required. Accordingly, the guard period may be defined as G_sym,B (> G_sym,A) guard symbol(s) or defined as G_slot guard slot(s). G_sym,B may have a larger value than G_sym,A.

Example 2-1) For type B half-duplex FDD operation, the guard periods of which each is called the half-duplex guard slot may be generated as follows by the UE.

- G_slot,B1 DL slots are not received from the same UE just before the UL slot, and
- G_slot,B2 DL slots are not received from the same UE just after the UL slot.

Example 2-1 may be a case where the required guard period is large in the case of Type B, so the guard period is defined as the unit of the slot and the guard period is configured for both DL-to-UL and UL-to-DL.

Example 2-2) For type B half-duplex FDD operation, the guard periods of which each is called the half-duplex guard symbol may be generated as follows by the UE.

- G_sym,B1 DL symbol(s) are not received from the same UE just before the UL slot, and
- G_sym,B2 DL symbol(s) are not received from the same UE just after the UL slot.

Example 2-2 as a case where the guard period is configured for both the DL-to-UL switching and the UL-to-DL switching is a case where type B guard period is not defined as the unit of the slot, but defined as multiple symbols. For example, Example 2-2 may be a case where since the required guard period (or switching time) is not small, it is difficult for the BS to secure a sufficient time for switching to the TA.

The guard period may be defined without distinguishing the type of half-duplex FDD, guard period (or switching time) information required for each type of the UE may be transferred to the BS as a capability reporting form, and the BS may also configure the guard symbol(s) by referring to the corresponding information.

Example 3) For half-duplex FDD operation, the guard periods of which each is called the half-duplex guard symbol(s) may be generated as follows by the UE.

- G_sym,1 DL symbol(s) are not received from the same UE just before the UL slot, and
- G_sym,2 DL symbol(s) are not received from the same UE just after the UL slot.

In the above-described examples, the G values (e.g., G_sym, G_slot, G_sym,A, or G_sym,B) may be defined for each frequency range. Since the performance and the cost of a used element may be different for each frequency range, the resulting circuit switching, RF retuning time, etc, etc., ay be different. For example, G values may be configured/defined by distinguishing FR1 (e.g., 410 MHz to 7125 MHz) and FR 2 (e.g., 24250 MHz to 52600 MHz).

Alternatively, the G values (e.g., (e.g., G_sym, G_slot, G_sym,A, or G_sym,B) may be defined for each subcarrier spacing (SCS). A reason for defining the G values for each SCS is that when the guard period temporally has a predetermined value TG (in us), the guard period is configured to be minimum compared with defining the guard symbol(s) by defining the guard symbol(s) as a minimum OFDM symbol number having a time duration equal to or larger than TG based on specific SCS1 and simply scaling SCS2 (> SCS1) to an SCS2 / SCS1 value to minimize resource waste.

Alternatively, the G values (e.g., (e.g., G_sym, G_slot, G_sym,A, or G_sym,B) may be configured/defined by simply scaling the guard symbol/slot for each SCS at an SCS ratio. For example, when the guard symbols/slots for a specific SCS (e.g., SCS1) are defined, the guard symbol(s)/slot may be defined/configured by simply scaling the SCS2 (> SCS1) to the SCS2 / SCS1 value based on the defined guard symbols/slots.

When the guard symbol/slot for each SCS is simply scaled and applied at the SCS ratio as described above, an SCS value which becomes a reference for defining the guard symbol/slot, i.e., a reference SCS may be required to be defined.

For example, from the viewpoint of signaling overhead, the reference SCS may be defined as a lowest SCS used for data transmission in the corresponding frequency range or frequency band without a separate signaling parameter. As a specific example, as in Table 2 described above, since 15, 30, and 60 KHz are supported in FR1 and 60, 120, and 240 KHz are supported in FR2, 15 KHz may be defined as reference SCS in FR1 and 60 KHz may be defined as the reference SC for the guard symbol/slot configuration in FR2.

As another example, a UE which is configured to monitor DCI format 2_0 in FDD may be configured with the reference SCS for the slot format of each UL/DL through the higher layer. In this case, the BS does not define a separate parameter (or when there is no separate parameter) by considering the signaling overhead, and the UE may assume the reference SCS for the guard symbol/slot/subframe as the reference SCS for the slot format. That is, the SCS associated with DCI format 2_0 may be assumed as the reference SCS. The DCI format 2_0 may be CRC-scrambled by SFI-RNTI and is used for announcing the slot format.

In this case, when the reference SCS of A and the reference SCS of B are different in the A-to-B switching operation (e.g., when the reference SC of UL and the reference SC of DL are different), the guard period may be defined based on the reference SCS of A. When A is a source carrier and B is a destination carrier in A-to-B switching, the guard period may be defined/configured based on the reference SCS of the source carrier. Alternatively, the guard period may be defined based on the reference SCS of the carrier to which the guard period belongs. That is, when the guard period belongs to A in the A-to-B switching, the guard period may be defined based on carrier A and when the guard period belongs to B, the guard period may be defined based on carrier B. Alternatively, as in Examples 1-1/1-2/2-1/2-2/3 described above, when all of the guard symbols/slots belong to DL and are generated in the form of no RX or discrete reception (DRX), the guard period may be defined based on the reference SCS of the DL carrier.

For example, in the case of a UE which is not configured to monitor DCI format 2_0 in FDD, the reference SCS for the guard period (e.g., guard symbol/slot/subframe) may be configured through the higher layer signaling. The reference SCS may be configured for each of UL and DL. The reference SCS (e.g., $\mu_{DL,a}$) for DL may be a value equal to or smaller than the SCS of any active/configured DL BWP. In this case, each guard symbol/slot/subframe defined based on the reference SCS may be applied during $2(\mu_{DL}-\mu_{DL,g})$ symbols/slots/subframes for a DL BWP with a random activated/configured SCS $\mu_{DL}$. Further, the reference SCS (e.g., $\mu_{DL,a}$) for UL may be a value equal to or smaller than the SCS of any active/configured UL BWP. In this case, each guard symbol/slot/subframe defined based on the reference SCS may be applied during $2^{(\mu_{UL}-\mu_{UL,g})}$ symbols/slots/subframes for a UL BWP with a random activated/configured SCS $\mu_{UL}$. Alternatively, the reference SCS may also be configured as a single value (e.g., $\mu_{XL,a}$) for DL and UL. In this case, the reference SCS may be a value equal to or smaller than the SCS of any activated/configured DL or UL BWP, and each guard/symbol/slot subframe defined based on the reference SCS may be applied during $2(\mu_{DL}-\mu_{DL,g})$ or $2(\mu_{UL}-\mu_{UL,g})$ symbols/slots/subframes for the DL BWP with a random activated/configured SCS $\mu_{UL}$ or the UL BWP with the activated/configured SCS $\mu_{UL}$, respectively.

The number of symbols/slots/subframes of the guard period may be configured based on the method and/or embodiment proposed in Method 2 described above.

<Method 3>

Meanwhile, flexible symbols/slots may also be defined to be included in the guard period in order to support the half-duplex FDD operation in NR. In current NR, the UE which is not configured to monitor DCI format 2_0 may perform DL reception and UL reception indicated by the DCI or higher layer configuration in the flexible symbol/slot configured through the higher layer signaling, and when the flexible symbol/slots is included in the guard period, the UE may not expect to perform the DL Rx or UL Tx operation.

In Method 1 described above, the method for defining the A-to-B switching time in order to support the half-duplex FDD is proposed, and when the method for configuring the flexible symbol/slot of Method 3 as the guard period is applied to Method 1, the switching time may be defined as in the following example.

For example, the DL-to-UL switching time $T_{DU}$ may be included in the UL or flexible symbol/slot after DL Rx, and the UE may not expect the UL Tx or flexible operation for the corresponding time. That is, in the case of the paired spectrum operation, a UE which may not perform the full-duplex FDD communication may not expect to perform transmission in the UL or flexible symbol/slot earlier than $T_{DU}$ after the end of the DL symbol received last.

For example, the UL-to-DL switching time $T_{UD}$ may be included in the DL or flexible symbol/slot after UL Tx, and the UE may not expect the DL Rx or flexible operation for the corresponding time. That is, in the case of the paired spectrum operation, the UE which may not perform the full-duplex FDD communication may not expect to perform transmission in the DL or flexible symbol/slot earlier than $T_{UD}$ after the end of the UL symbol received last.

In the case of an extended CP, since an OFDM symbol length, the number of symbols I the slot, etc., may be different as compared with a normal CP, a separate guard period definition may be required, and the same method as the method (e.g., Method 2, Method 3, etc.) for assuming the normal CP may be applied. In this case, since there may be no difference in the case of the guard slot that defines the guard period as the unit of the slot, the extended CP may be separately defined only for the guard symbol(s) for defining the guard period as the unit of the symbol.

Alternatively, a separate configuration, capability, etc., are not defined for the extended CP, but the guard period of the extended CP may be determined based on the guard period defined based on the normal CP. For example, the OFDM symbol of the extended CP which totally or partially overlaps with the OFDM symbol of the normal CP defined as the guard symbol may be defined as the guard symbol having the extended CP. That is, when one of the overlapped normal CP symbols is the guard symbol, the UE may determine the extended CP symbol as the guard symbol.

**<Proposal 2>**

The BS may support the half-duplex FDD operation through scheduling by using the methods of Proposal 1 described above, but when it is difficult for the BS to accurately predict the UL transmission of the UE or it is difficult to realistically avoid the collision with a resource periodically configured for a specific purpose in advance, a method for avoiding a link direction collision may be required for a synchronized half-duplex FDD operation between the BS and the UE. Proposal 2 of the present disclosure proposes methods for preventing the link direction collision in the half-duplex FDD operation.

As described above, switching A to B in the half-duplex FDD operation will be expressed as 'A-to-B switching' for convenience of description. For example, switching from the downlink to the uplink may be represented by 'DL-to-UL switching' and switching from the uplink to the downlink may be represented by 'UL-to-DL switching'.

The A-to-B switching may be (i) indicated by the DCI or (ii) indicated through the higher layer signaling (e.g., RRC and MAC-CE). Indicating the A-to-B switching by the DCI may be interpreted as indicating scheduling for B by the DCI, and interpreted as allocating the resource for B by the DCI. Indicating the A-to-B switching through the higher layer signaling may mean indicating the A-to-B switching based on other information/signal except for the DCI. Indicating the A-to-B switching by the higher layer signaling may be interpreted as indicating the scheduling for B through the higher layer signaling and also interpreted as allocating the resource for B through the higher layer signaling.

The link direction collision means a collision which may occur in the DL-to-UL switching or the UL-to-DL switching in the half-duplex FDD operation. This may mean a case where a time domain resource associated with the DL carrier and the time domain resource associated with the UL carrier overlap with each other. Accordingly, Proposal 2 proposes a method for preventing/avoiding the collision and/or an operation method of the UE/BS in a collision situation.

Further, the UE of Proposal 2 may correspond to the redcap UE.

<Method 1>

In the half-duplex FDD operation, a location of the guard period and/or the operations of the UE and the BS may be configured/indicated according to which layer of signal or information the A-to-B switching occurs based on. In other words, the location of the guard period and/or the operations of the UE and the BS may be configured/indicated according to the A-to-B switching i) occurs by B scheduled based on the DCI (i.e., a dynamic scheme) or ii) occurs by B scheduled based on a signaling (e.g., higher layer signaling) except for the DCI (i.e., a configured scheme).

When the DL-to-UL switching occurs by the UL Tx indicated by the DCI in the half-duplex FDD operation (i.e., when the UL transmission is scheduled by the DCI), the UE may not expect the DL Rx during the guard period before the UL slot/symbol. This may also be interpreted as the UE dropping the DL Rx during the guard period. In this case, the guard period may be present before the UL interval of the time domain. In other words, the guard period may be included in the DL interval of the time domain, and the UE may not expect the DL Rx during the guard period.

Alternatively, when the switching the uplink to the downlink (UL-to-DL switching) occurs by the DL Rx indicated by the DCI in the half-duplex FDD operation (i.e., when the DL transmission is scheduled by the DCI), the UE may not expect the UL Tx during the guard period before the DL slot/symbol. This may also be interpreted as the UE dropping the UL Tx during the guard period. In this case, the guard period may be present before the DL interval of the time domain. In other words, the guard period may be included in the UL interval of the time domain, and the UE may not expect the UL Tx during the guard period. When the guard period occupies a part of the corresponding slot or some symbols, all corresponding slots may be dropped or only a part/symbol(s) overlapped with the guard period in the corresponding slot may be dropped.

When the DL-to-UL switching occurs for the UL Tx configured through the higher layer signaling after the DL Rx indicated by the DCI in the half-duplex FDD operation, the UE may not expect the UL Tx during the guard period after the DL slot/symbol. This may be interpreted as the UE dropping the UL Tx during the guard period. In this case, the guard period may be present before the DL interval of the time domain. In other words, the guard period may be included in the UL interval of the time domain, and the UE may not perform transmission in the UL during the guard period. Alternatively, when the guard period occupies a part of the corresponding slot or some symbols included in the UL interval, the UE may i) drop all corresponding slots or ii) only a part/symbol(s) overlapped with the guard period in the corresponding slot. Dropping only the overlapped part/symbol(s) may be limited only to partial UL transmission (e.g., SRS transmission).

When the UL-to-DL switching occurs for the DL Rx configured through the higher layer signaling after the UL Tx indicated by the DCI in the half-duplex FDD operation, the UE may not expect the DL Rx during the guard period after the UL Tx slot/symbol. This may be interpreted as the UE dropping the DL Rx during the guard period. In this case, the guard period may be present after the UL interval of the time domain. In other words, the guard period may be included in the DL interval of the time domain, and the UE may not expect the DL Rx during the guard period. The BS may not transmit the DL Rx to the UE during the guard period after the UL Tx slot/symbol.

According to Method 1 of Proposal 2 described above, when scheduling schemes of A and B are different in the A-to-B switching, i.e., when one is scheduled based on DCI and the other one is scheduled based on the signaling (e.g., higher layer signaling) except for the DCI, the guard period may be included in the time duration configured based on the higher layer signaling by prioritizing that the scheduling scheme is scheduled based on the DCI.

<Method 2>

In the half-duplex FDD operation, the location of the guard period and/or the operations of the UE and the BS may be configured/indicated according to the type/contents of the information/signal in A and/or B in the A-to-B switching.

First Embodiment

The first embodiment is an example for a case where an information/signal transmitted in the UL is a PRACH preamble in the DL-to-UL switching or the UL-to-DL switching.

A random access procedure is used for various purposes. For example, the random access procedure may be used for an initial network access, handover, and UE-triggered UL data transmission. The UE may obtain UL synchronization and UL transmission resources through the random access procedure. The random access procedure is divided into a contention-based random access procedure and a contention free random access procedure.

The UE may transmit a random access preamble as message 1 (Msg1) of the random access procedure through the PRACH. The random access preamble transmitted through the PRACH may be referred to as PRACH preamble.

Random access preamble sequences having two different lengths are supported. Long sequence length 839 is applied to subcarrier spacings of 1.25 and 5 kHz, and short sequence length 139 is applied to subcarrier spacings of 15, 30, 60 and 120 kHz.

Multiple RACH preamble formats are defined with one or more RACH OFDM symbols and different cyclic prefixes (and/or guard time). An RACH configuration for a cell is included in system information of the cell and provided to the UE. The RACH configuration includes information on the subcarrier spacing of the PRACH, available preambles, the preamble format, etc. The RACH configuration includes association information between the SSBs and the RACH (time-frequency) resources. The UE transmits the random access preamble in the RACH time-frequency resource associated with the detected or selected SSB.

A threshold for the SSB for the RACH resource association may be configured by the network, and transmission or retransmission of the RACH preamble is performed based on an SSB in which a reference signal received power (RSRP) measured based on the SSB satisfies the threshold. For example, the UE may select one of the SSB(s) in which the RSRP satisfies the threshold, and transmit or retransmit the RACH preamble based on the RACH resource associated with the selected SSB.

When the DL-to-UL switching occurs for transmission of the PRACH preamble in the middle of the DL Rx in the half-duplex FDD operation, the UE may be defined not to expect the DL Rx during the guard period before a valid RACH occasion (hereinafter, referred to as RO) in which the transmission of the PRACH preamble is valid. This may also be interpreted as the UE dropping the DL Rx during the guard period. In this case, the guard period may be positioned before the valid RO in the time domain. In other words, the guard period may be included in the DL interval of the time domain, and the UE may not expect the DL Rx during the guard period.

The example may means that the valid RO takes precedence over dynamic DL when switching dynamically scheduled DL (e.g., DL scheduled by the DCI) to the valid RO for transmission of the PRACH preamble. Further, the example may means that the valid RO takes precedence over semi-statically configured DL when switching the semi-statically configured DL (e.g., DL configured through the higher layer signaling) to the valid RO for the transmission of the PRACH preamble.

That is, for a collision case in which the dynamically scheduled DL transmission overlaps with the valid RO, the valid RO may take precedence over the dynamic DL. Similarly for a collision case in which the semi-statically configured DL transmission overlaps with the valid RO, the valid RO may take precedence over the semi-static DL. However, in both cases above, unlike the TDD case, an RX-to-TX (i.e., DL-to-UL) switching time should be considered for an HD-FDD operation in an FDD band before the valid RO. That is, the UE may not expect reception in DL later than the RX-to-TX switching time before the valid RO starts. Similarly, the TX-to-RX switching time may be considered for the HD-FDD operation in the FDD band after the valid RO. That is, the UE may not expect reception in DL earlier than the TX-to-RX switching time before the valid RO ends. The valid RO in the present disclosure may include or not include $N\_gap$ symbols before the valid RO. Here, N_gap (i.e., $N_{gap}$) may be defined as in Table 8 below.

Table 8 illustrates an example of $N_{gap}$ values for different preambles SCS $\mu$.

[Table 8]

| Preamble SCS | $N_{gap}$ |
|---|---|
| 1.25 kHz or 5 kHz | 0 |
| 15 kHz or 30 kHz or 60 kHz or 120 kHz | 2 |

The operation according to the first embodiment of Proposal 2 described above may be defined as in Table 9.
[Table 9]

For a set of symbols of a slot corresponding to a valid PRACH occasion, $N_{gap}$ symbols, and $N_{GP}$ (N_GP) symbols before the valid PRACH occasion, the UE does not receive PDCCH, PDSCH, or CSI-RS in the slot if a reception would overlap with any symbol from the set of symbols. The UE does not expect the set of symbols of the slot to be indicated as downlink by *tdd-UL-DL-ConfigurationCommon* or *tdd-UL-DL-ConfigurationDedicated.*

In Table 9, N_GP symbols represent a value defined as the unit of the symbol for the purpose of providing the switching time. For example, the N_GP symbol may be defined as the unit of the symbol for each SCS based on the method of Proposal 1 described above. As an example, N_GP = 1 symbol may be defined for all SCSs or N_GP may be configured to 1, 2, and 4 for 15 kHz, 30 kHz, and 60 kHz SCS, respectively. N_GP may be defined as the unit of a time T_c like the switching time in Proposal 1 described above.

As another example, when the DL Rx is an operation indicated by the DCI (i.e., scheduled by the DCI), ROs which are present after the guard period from a last DL symbol may be defined as the valid RO capable of transmitting the PRACH preamble. That is, the PRACH preamble transmission may not be expected in the RO which starts before a time point separated from the last DL symbol for the DL Rx indicated by the DCI by the guard period in the half-duplex FDD operation. In other words, the UE may transmit the PRACH preamble in the valid RO after the time point separated from the last symbol of the DL RX at least by the guard period. This may mean that the DL Rx dynamically scheduled by the DCI takes precedence over the PRACH preamble.

As yet another example, when the DL-to-UL switching occurs for the PRACH preamble transmission through the RO from the SSB Rx in the half-duplex operation, the PRACH preamble transmission may be permitted in the RO which starts after the guard period from the last symbol of the SSB transmission. That is, the valid RO may be to satisfy the condition.

Alternatively, when the UL-to-DL switching occurs for the SSB Rx after the PRACH preamble transmission through the RO, if the SSB is present before the guard period from the last symbol of the RO, the PRACH preamble transmission may not be expected in the corresponding RO. That is, the valid RO may be not to satisfy the condition.

In other words, the PRACH preamble transmission may be permitted in the RO which ends before the guard period from a first symbol of the SSB transmission. That is, the valid RO may be to satisfy the condition. Further, if the PRACH preamble is present during the guard period before an SSB transmission symbol, the PRACH preamble transmission may not be expected in the corresponding PO.

The valid RO may be defined as in Table 10 based on the above-described examples.

[Table 10]

| |
|---|
| - if a UE is not provided *tdd-UL-DL-ConfigurationCommon,* a PRACH occasion in a PRACH slot is valid if it does not precede a SS/PBCH block in the PRACH slot and starts at least ($N_{gap}$ + $N_{GP}$) symbols after a last SS/PBCH block reception symbol, where $N_{gap}$ is provided in Table 8.1-2 and, if *channelAccessMode = semistatic* is provided, does not overlap with a set of consecutive symbols before the start of a next channel occupancy time where the UE does not transmit. <br> - the candidate SS/PBCH block index of the SS/PBCH block corresponds to the SS/PBCH block index provided by *ssb-PositionsInBurst* in *SIB1* or in *ServingCellConfigCommon,* <br> - *If a UE is provided tdd-UL-DL-ConfigurationCommon, a PRACH occasion in a PRACH slot is valid if* <br> - it is within UL symbols, or <br> - it does not precede a SS/PBCH block in the PRACH slot and starts at least ($N_{gap}$ + $N_{GP}$) symbols after a last downlink symbol and at least ($N_{gap}$ + $N_{GP}$) symbols after a last SS/PBCH block symbol, where $N_{gap}$ is provided in Table 8.1-2, and if *channelAccessMode = semistatic* is provided, does not overlap with a set of consecutive symbols before the start of a next channel occupancy time where there shall not be any transmissions, <br> - the candidate SS/PBCH block index of the SS/PBCH block corresponds to the SS/PBCH block index provided by *ssb-PositionsInBurst* in *SIB1* or in |
| *ServingCellConfigCommon.* |

In Table 10, N_gap may be defined as in Table 8 described above.

Second Embodiment

The second embodiment is an example for a case where information received in the DL in the DL-to-UL switching or the UL-to-DL switching is a synchronization signal block (SSB). The UE may perform cell search, system information acquisition, beam alignment for initial access, DL measurement, etc., based on the SSB. The SSB is mixedly used with an SS/Synchronization Signal/Physical Broadcast channel (PBCH) block. The SSB is constituted by a primary synchronization signal (PSS), a secondary synchronization signal (SSS), and a physical broadcast channel (PBCH). The SSB is constituted by four consecutive OFDM symbols and the PSS, the PBCH, the SSS/PBCH, or the PBCH is transmitted for each OFDM symbol. Each of the PSS and the SSS may be constituted by one OFDM symbol and 127 subcarriers and the PBCH is constituted by 3 OFDM symbols and 576 subcarriers.

When the DL-to-UL switching occurs for the UL Tx after the SSB Rx in the half-duplex FDD operation, the UE may not expect the UL Tx during the guard period after the last symbol of the SSB transmission. This may be interpreted as the UE dropping the UL Tx during the guard period. In this case, the guard period may be positioned after the last symbol of the SSB transmission in the time domain. In this case, a part or the entirety of the guard period may overlap with the UL interval, and the UE may not perform transmission in the UL during the guard period. When the guard period occupies a part of the corresponding slot or some symbols, all corresponding UL slots may be dropped or only a part/symbol(s) overlapped with the guard period in the corresponding slot may be dropped. Dropping only the overlapped part/symbol(s) may be limited only to partial UL transmission (e.g., SRS transmission).

When the UL-to-DL switching occurs for the SSB Rx after the UL Tx in the half-duplex FDD operation, the UE may not expect the UL Tx during the guard period before the start symbol of the SSB transmission. This may be interpreted as the UE dropping the UL Tx during the guard period. In this case, a part or the entirety of the guard period may overlap with the UL interval in the time domain, and the UE may not perform transmission in the UL during the guard period. When the guard period occupies a part of the corresponding slot or some symbols, all corresponding UL slots may be dropped or only a part/symbol(s) overlapped with the guard period in the corresponding slot may be dropped. The operation of dropping only the overlapped part/symbol(s) may be limited only to partial UL transmission (e.g., SRS transmission).

For a collision case in which the dynamically scheduled UL transmission (e.g., UL transmission scheduled through the DCI) overlaps with the SSB, the SSB may take precedence over the dynamic UL. Similarly, for a collision case in which the semi-statically configured UL transmission (e.g., UL transmission configured through the higher layer signaling) overlaps with the SSB, the SSB may take precedence over the semi-static UL. However, in both cases above, unlike the TDD case, the RX-to-TX (i.e., DL-to-UL) switching time should be considered for the HD-FDD operation in the FDD band after the set of the SSB symbols. That is, the UE may not expect to transmit the SSB in the UL earlier than the RX-to-TX switching time after the end of the DL symbol received last. Similarly, the TX-to-RX switching time may be considered for the HD-FDD operation in the FDD band after the set of the SSB symbols. That is, the UE may not expect to transmit the SSB in the UL later than the TX-to-RX switching time after the start of the DL symbol received first.

For the collision cases in which the semi-statically configured UL transmission and the SSB overlap, the semi-statically configured UL transmission includes a valid PUSCH occasion including the valid RO and a 2-step RACH. For both cases, unlike the TDD, the RX-to-TX (or TX-to-RX) switching time should be described for the HD-FDD operation of the FDD band after (or before) the set of the SSB symbols. The valid RO in the present disclosure may include or not include N_gap symbols before the valid RO. Here, N_gap may be defined as in Table 8 described above.

The valid PUSCH occasion may be defined as in Table 11 based on the above-described examples.

[Table 11]

| |
|---|
| - *if a UE is not provided tdd-UL-DL-ConfigurationCommon, a PUSCH occasion is valid if the PUSCH occasion*<br>- does not precede a SS/PBCH block in the PUSCH slot, and<br>- starts at least ($N_{gap}$ + $N_{GP}$) symbols after a last SS/PBCH block symbol, where $N_{gap}$ is provided in Table 8.1-2<br>- *if a UE is provided tdd-UL-DL-ConfigurationCommon, a PUSCH occasion is valid if the PUSCH occasion*<br>- is within UL symbols, or<br>- does not precede a SS/PBCH block in the PUSCH slot, and<br>- starts at least ($N_{gap}$ + $N_{GP}$) symbols after a last downlink symbol and at least ($N_{gap}$ + $N_{GP}$) symbols after a last SS/PBCH block symbol, where $N_{gap}$ is provided in Table 8.1-2 and, if *channelAccessMode = semistatic* is provided, does not overlap with a set of consecutive symbols before the start of a next channel occupancy time where the UE does not transmit [15, TS 37.213]. |

Meanwhile, the UE may be to receive the SSB for measurement before, after, or during the UL transmission. In an SSB burst set, up to L SSBs may be transmitted and the number/locations of SSBs which are actually transmitted may vary for each BS/cell. The number/locations of SSBs which are actually transmitted may be used for rate-matching and measurement and information on the actually transmitted SSB may be provided to the UE. For SSB reception for measurement, the BS may configure an SSB-based RRM measurement timing configuration (SMTC) window and configure all SSBs or some SSBs within the corresponding window to be received for measurement. In this case, a time duration of receiving the SSB for the measurement may be defined, and the UE may assume not expecting the UL Tx or not receiving a request for the UL transmission from the BS during the corresponding interval. In the half-duplex FDD operation, the SSB reception interval for the measurement may be defined as an interval constituted by SSB transmission symbols and an interval including the guard period before, after, or before and after the SSB transmission symbols. The method may be applied only to a case where timing synchronization between serving cells is guaranteed. Further, it may be assumed that a measurement gap (MG) is configured for intra/inter-frequency measurement, and the UE does not expect the DL Rx and/or the UL Tx during the corresponding interval. When the UL-to-DL switching, the DL-to-UL switching, and the guard period required in the switching are considered in the half-duplex FDD operation, the SSB reception interval within the MG may be defined an interval from {MG start point + guard period} to {MG end point - guard period}.

In the half-duplex FDD operation, when the guard period is large, the number of SSBs received in the MG substantially decreases, which may influence measurement performance. In order to solve a measurement performance deterioration problem which may occur when the guard period is large, a new MG value including the guard period is defined to be used by the UE (by the higher layer configuration) in the half-duplex FDD operation.

<Method 3>

When a collision between the DL and the UL occurs, a priority may be determined according to transmission types of the DL and the UL. For example, the transmission type of the DL may be a mapping type of the PDSCH, and the transmission type of the UL may be a PUSCH mapping type. This may mean that the transmission types of the DL and the UL are determined by a DMRS location within each (mini) slot/subframe.

For example, when the DMRS for the PUSCH transmission is transmitted to a first symbol of the UL slot after the DL-to-UL switching (e.g., PUSCH mapping type B), the UE may not expect the DL Rx during the guard period before the UL slot/symbol. That is, the UL transmission may take precedence over the DL transmission. In this case, the guard period may be included in a DL time duration, and the UE may drop the DL Rx during the guard period.

Method 2 described above may be applied only to a case where both A and B are configured through the higher layer signaling or both A and B are dynamically scheduled by the DCI in the A-to-B switching. When schemes of configuring or scheduling A and B are different (e.g., when A is configured through the higher layer signaling and B is dynamically scheduled by the DCI), the UE may operate according to Method 1/Method 2 of Proposal 2 described above.

<Method 4>

When the DL-to-UL switching occurs, the location of the guard time/guard period may be fixed to the last part (symbol, guard time) of the DL slot (LTE approach) or fixed to a first part (symbol, guard time) of the UL slot (NR approach). Alternatively, the BS may select one of two methods. Location information of the guard time/guard period may be transmitted as system information or indicated through UE-specific RRC signaling.

The BS configuration described in Method 4 described above may be applied only to a case where both A and B are configured through the higher layer signaling or both A and B are dynamically scheduled by the DCI. When schemes of configuring or scheduling A and B are different (e.g., when A is configured through the higher layer signaling and B is dynamically scheduled by the DCI), the UE may operate according to Method 1/Method 2 of Proposal 2 described above.

The method for configuring the guard period for supporting the half-duplex FDD operation is described based on the method and/or embodiments of Proposal 1/Proposal 2 described above. In order to efficiently use the resource in the half-duplex FDD operation, data or control information may be transmitted by rate matching around the guard period. Puncturing may be considered as an alternative to the rate matching, and when the same transmission information amount and the guard period are assumed, there is an advantage of being capable of receiving transmission data at an SNR in which the rate matching is lower than the puncturing.

The rate matching around the guard period may be limited only to a case where understanding the guard period in the same between the UE and the BS. For example, only when the guard period is predefined as a specific value or configured through the higher layer configuration, the UE may perform PDSCH reception or PUSCH transmission by assuming the rate matching. When there is no misunderstanding of the guard period between the BS and the UE, the BS may not transmit separate rate matching information through the DCI. In this case, the UE may receive the PDSCH or transmit the PUSCH rate-matched by using time domain resource allocation (TDRA) information received through the DCI and guard period information acquired in advance.

Alternatively, the BS may configure whether to apply the rate matching through the higher layer in a slot in which the guard period is present. A common or dedicated RRC parameter may be defined for the purpose. Further, a rate matching indication flag may be added in order to dynamically select whether to apply the rate matching in the slot in which the guard period is present. For example, when the value of the corresponding flag is 1, the UE may perform the DL Rx operation by assuming the rate matching in the slot in which the guard period is present and when the value of the corresponding flag is 0, the UE may perform the DL Rx operation by assuming the puncturing (an opposite operation is also possible).

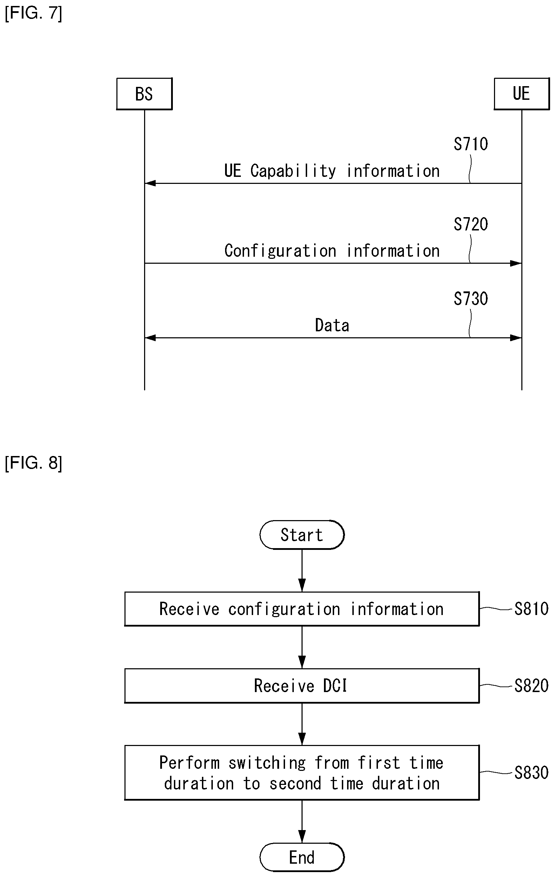

FIG. 7 illustrates an example of a signaling flowchart between a user equipment (UE) and a BS to which methods (e.g., Proposal 1/Proposal 2, etc.) proposed in the present disclosure may be applied. In FIG. 7, it is assumed that the UE operates by a half-duplex FDD scheme. Further, the UE of FIG. 7 may correspond to the 'redcap UE'. FIG. 7 is just for convenience of the description and does not limit the scope of the present disclosure. Further, some step(s) illustrated in FIG. 7 may be omitted according to a situation and/or a configuration.

The UE may transmit UE capability information to the BS. That is, the BS may receive the UE capability information from the UE (S710). The UE capability information may include at least one of capability information for the switching time or capability information for the guard period described in Proposal 1/Proposal 2. The BS may perform scheduling to the UE based on the UE capability information.

The UE may receive configuration information from the BS. That is, the BS may transmit, to the UE, the configuration information (S720). The configuration information may include at least one of information on the switching time or information on the guard period determined the UE capability information reported by the UE.

For example, as described in Method 2 of Proposal 1 described above, the information on the guard period may include a symbol number or a slot number constituting the guard period. The information on the guard period may be configured for each SCS or configured for each frequency range.

Data transmission and reception between the UE and the BS may be performed based on the configuration information (S730). Since the UE operates according to half-duplex FDD, the DL and the UL are not simultaneously performed in the same time duration. Further, data transmission and reception may be performed by avoiding the collision between the DL and the UL based on the methods of Proposal 2 described above.

FIG. 8 illustrates an example of an operation flowchart in which the user equipment (UE) transmits or receives data to which methods (e.g., Proposal 1/Proposal 2, etc.) proposed in the present disclosure may be applied. In FIG. 8, it is assumed that the UE operates by a half-duplex FDD scheme. Further, the UE of FIG. 8 may correspond to the

'redcap UE'. FIG. 8 is just for convenience of the description and does not limit the scope of the present disclosure. Further, some step(s) illustrated in FIG. 8 may be omitted according to a situation and/or a configuration.

The UE may receive configuration information (S810). That is, the BS may transmit, to the UE, the configuration information. The configuration information may be received through a higher layer signaling (e.g., RRC, MAC-CE, etc.). The configuration information may include information related to a guard period for preventing the collision/overlapping which may occur during the DL-to-UL switching or the UL-to-DL switching in the half-duplex FDD operation. The guard period for the DL-to-UL switching or the UL-to-DL switching may be configured based on the information related to the guard period. The guard period may be i) configured for each SCS or ii) configured for each frequency range.

As a specific example, the guard period corresponding to each SCS may be configured/indicated. Alternatively, based on a first value which is a guard period corresponding to a reference SCS, a second value which is a guard period corresponding to another SCS is determined, and a ratio of the reference SCS to another SCS may be equal to a ratio of the first value to the second value.

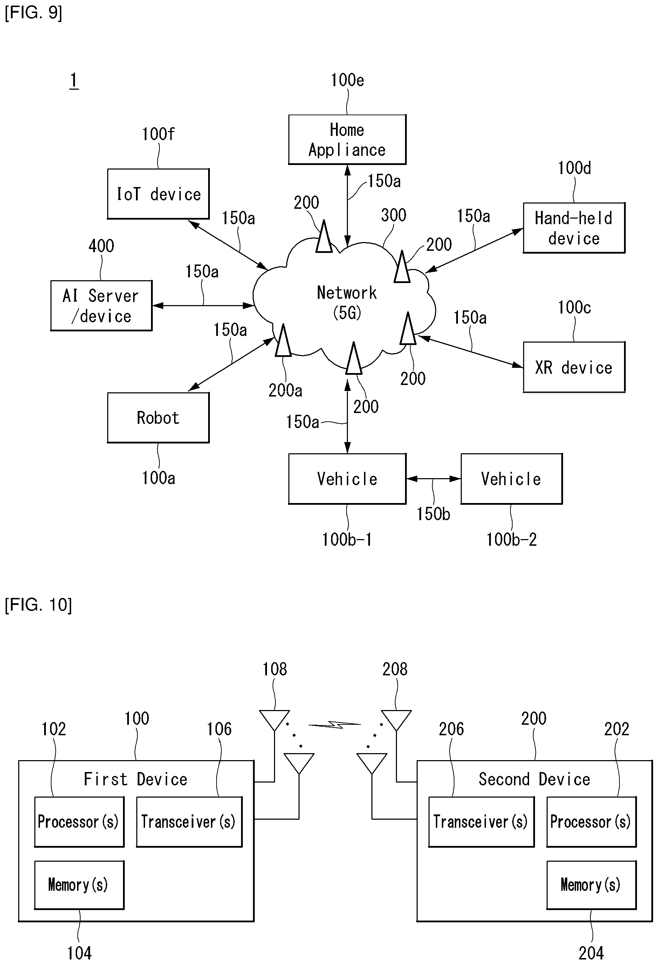

For example, an operation of the UE (reference numeral 100/200 in FIGS. 9 to 13) which receives the configuration information in step S810 described above may be implemented by devices in FIGS. 9 to 13 to be described below. For example, referring to FIG. 10, one or more processors 102 may control one or more transceivers 106 and/or one or more memories 104 so as to transmit the configuration information and one or more transceivers 106 may receive the configuration information.

The UE may receive downlink control information (DCI) (S820). That is, the BS may transmit, to the UE, the DCI. The DCI may be received through a control channel (e.g., PDCCH). For example, the DCI may include scheduling information for a data channel (e.g., PDSCH, PUSCH). Further, when the DCI is DCI format 2_0, a slot format may also be indicated based on the DCI.

(i) First time duration in which first data is transferred in a first direction, and (ii) second time duration in which second data is transferred in a second direction opposite from the first direction may be configured based on at least one of the configuration information or the DCI. For example, when the first direction is a downlink, the second direction may be an uplink. That is, the first time duration in which the first data (e.g., PDSCH) is transferred to the downlink and the second time duration in which the second data (e.g., PUSCH) is transferred to the uplink may be configured. As another example, when the first direction is the uplink, the second direction may be the downlink. That is, the first time duration in which the first data (e.g., PUSCH) is transferred to the uplink and the second time duration in which the second data (e.g., PDSCH) is transferred to the downlink may be configured.

For example, an operation of the UE (reference numeral 100/200 in FIGS. 9 to 13) which receives downlink control information in step S820 described above may be implemented by the devices in FIGS. 9 to 13 to be described below. For example, referring to FIG. 10, one or more processors 102 may control one or more transceivers 106 and/or one or more memories 104 so as to receive the DCI and one or more transceivers 106 may receive the DCI.

The UE may perform switching from the first time duration into the second time duration based on the first direction and the second direction being opposite to each other. For example, the UE may perform switching from the first time duration to the second time duration based on the first direction being the downlink and the second direction being the uplink. As another example, the UE may perform switching from the first time duration for transmitting the uplink to the second time duration for receiving the downlink based on the first direction being the uplink and the second direction being the downlink.

A guard period required for the switching may be included in time duration in which data having a lower priority is transferred, between the first time duration or the second time duration. This may mean that the time duration in which the data having the lower priority between the first time duration or the second time duration overlaps with a part or the entirety of the guard period. The guard period may include a switching time from the first time duration to the second time duration.

Priorities of the first data and the second data may be determined based on a predefined rule.

For example, the predefined rule may be related to a type of information for scheduling the second data. As a specific example, the second data may be determined to have a higher priority than the first data based on the second data being scheduled by the DCI. In this case, the guard period may be included in the first time duration.

As another example, the predefined rule may be related to at least one type of the first data or the second data. As a specific example, the guard period may be included in the first time duration based on the second data being the PRACH preamble. In this case, the UE may not receive the first data during the guard period included in the first time duration. As another example, based on the first data being an SSB and the second data being the PRACH preamble, the guard period may be located after a last symbol in which the SSB is received in the first time duration.

For example, the guard period may be included in the second time duration based on the first data being the SSB. In this case, the UE may not transmit the second data before the guard period included in the second time duration after receiving the SSB is terminated.

For example, an operation of the UE (reference numeral 100/200 in FIGS. 9 to 13) which performs switching in step S830 described above may be implemented by the devices in FIGS. 9 to 13 to be described below. For example, referring to FIG. 10, one or more processors 102 may control one or more transceivers 106 and/or one or more memories 104 so as to perform the switching.

The UE may transmit data or receive data in a second direction in the second time duration after the switching.

Although not illustrated in FIG. 8, the UE may transmit the capability information. That is, the BS may receive, from the UE, the capability information. The capability information may include at least one of the capability information related to the switching time or the capability information related to the guard period described in Proposal 1/Proposal 2. The BS may perform scheduling to the UE based on the capability information.

As mentioned above, the BS/UE signaling and operation (e.g., Proposal 1/2, FIG. 7/8, etc.) may be implemented by the devices (e.g., FIGS. 9 to 13) to be described below. For example, the BS may correspond to a first wireless device and the UE may correspond to a second wireless device and in some cases, an opposite case thereto may also be considered.

For example, the BS/UE signaling and operation (e.g., Proposal 1/2/FIG. 7/8, etc.) may be processed by one or more processors (e.g., reference numerals 102 and 202) in FIGS. 9 to 13 and the BS/UE signaling and operation (e.g., Proposal 1/2, FIG. 7/8, etc.) may be stored in one or more memories (e.g., reference numerals 104 and 204) in the form of a command/program (e.g., instruction and executable code) for driving at least one processor (e.g., 102 and 202) in FIGS. 9 to 13.

## Communication system applied to the disclosure

The various descriptions, functions, procedures, proposals, methods, and/or operational flowcharts of the disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 9 illustrates a communication system (1) applied to the disclosure.

Referring to FIG. 9, a communication system applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

**Devices applicable to the disclosure**

FIG. 10 illustrates wireless devices applicable to the disclosure.

Referring to FIG. 10, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 9.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include at least one processor 202 and at least one memory 204 and additionally further include at least one transceiver 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SOAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. Using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

**Signal Processing Circuit Example to Which Disclosure is Applied**

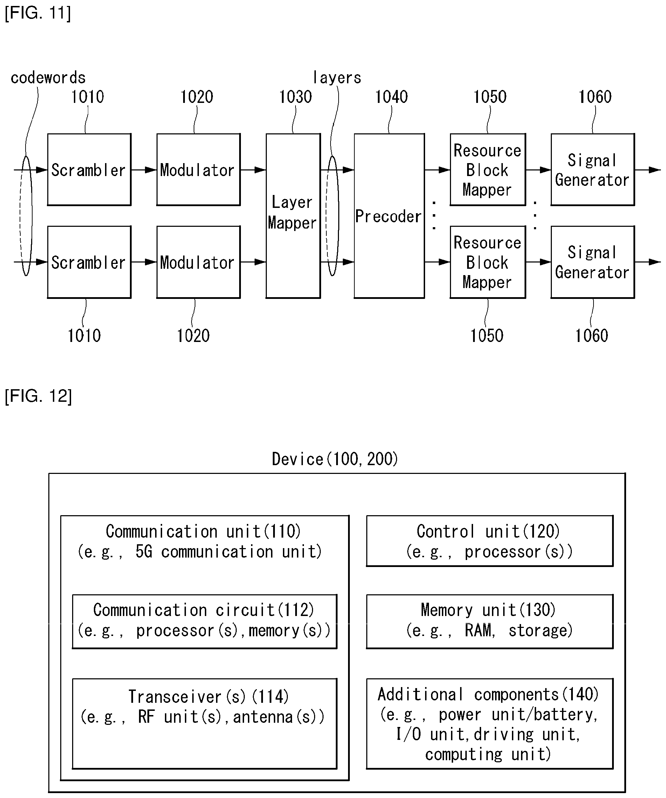

FIG. 11 illustrates a signal processing circuit for a transmit signal.

Referring to FIG. 11, a signal processing circuit 1000 may include a scrambler 1010, a modulator 1020, a layer mapper 1030, a precoder 1040, a resource mapper 1050, and a signal generator 1060. Although not limited thereto, an operation/function of FIG.115 may be performed by the processors 102 and 202 and/or the transceivers 106 and 206 of FIG. 10. Hardware elements of FIG. 11 may be implemented in the processors 102 and 202 and/or the transceivers 106 and 206 of FIG. 10. For example, blocks 1010 to 1060 may be implemented in the processors 102 and 202 of FIG. 10. Further, blocks 1010 to 1050 may be implemented in the processors 102 and 202 of FIG. 10 and the block 1060 of FIG. 10 and the block 1060 may be implemented in the transceivers 106 and 206 of FIG. 10.

A codeword may be transformed into a radio signal via the signal processing circuit 1000 of FIG. 11. Here, the codeword is an encoded bit sequence of an information block. The information block may include transport blocks (e.g., a UL-SCH transport block and a DL-SCH transport block). The radio signal may be transmitted through various physical channels (e.g., PUSCH and PDSCH).

Specifically, the codeword may be transformed into a bit sequence scrambled by the scrambler 1010. A scramble sequence used for scrambling may be generated based on an initialization value and the initialization value may include ID information of a wireless device. The scrambled bit sequence may be modulated into a modulated symbol sequence by the modulator 1020. A modulation scheme may include pi/2-BPSK(pi/2-Binary Phase Shift Keying), m-PSK(m-Phase Shift Keying), m-QAM(m-Quadrature Amplitude Modulation), etc. A complex modulated symbol sequence may be mapped to one or more transport layers by the layer mapper 1030. Modulated symbols of each transport layer may be mapped to a corresponding antenna port(s) by the precoder 1040 (precoding). Output z of the precoder 1040 may be obtained by multiplying output y of the layer mapper 1030 by precoding matrix W of N * M. Here, N represents the number of antenna ports and M represents the number of transport layers. Here, the precoder 1040 may perform precoding after performing transform precoding (e.g., DFT transform) for complex modulated symbols. Further, the precoder 1040 may perform the precoding without performing the transform precoding.

The resource mapper 1050 may map the modulated symbols of each antenna port to a time-frequency resource. The time-frequency resource may include a plurality of symbols (e.g., CP-OFDMA symbol and DFT-s-OFDMA symbol) in a time domain and include a plurality of subcarriers in a frequency domain. The signal generator 1060 may generate the radio signal from the mapped modulated symbols and the generated radio signal may be transmitted to another device through each antenna. To this end, the signal generator 1060 may include an Inverse Fast Fourier Transform (IFFT) module, a Cyclic Prefix (CP) inserter, a Digital-to-Analog Converter (DAC), a frequency uplink converter, and the like.

A signal processing process for a receive signal in the wireless device may be configured in the reverse of the signal processing process (1010 to 1060) of FIG. 11. For example, the wireless device (e.g., 100 or 200 of FIG. 10) may receive the radio signal from the outside through the antenna port/transceiver. The received radio signal may be transformed into a baseband signal through a signal reconstructer. To this end, the signal reconstructer may include a frequency downlink converter, an analog-to-digital converter (ADC), a CP remover, and a Fast Fourier Transform (FFT) module. Thereafter, the baseband signal may be reconstructed into the codeword through a resource de-mapper process, a postcoding process, a demodulation process, and a de-scrambling process. The codeword may be reconstructed into an original information block via decoding. Accordingly, a signal processing circuit (not illustrated) for the receive signal may include a signal reconstructer, a resource demapper, a postcoder, a demodulator, a descrambler, and a decoder.

## Example of a wireless device applied to the disclosure

FIG. 12 illustrates another example of a wireless device applied to the disclosure. The wireless device may be implemented in various forms according to a use-case/service(See Fig. 9).

Referring to FIG. 12, wireless devices 100 and 200 may correspond to the wireless devices 100 and 200 of FIG. 10 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 104 of FIG. 10. For example, the transceiver(s) 114 may include the one or more transceivers 106 and 106 and/or the one or more antennas 108 and 108 of FIG. 10. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110).

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcast terminal, a hologram device, a public safety device, an MTC device, a medicine device, a fintech device (or a finance device), a security device, a climate/environment device, the AI server/device (400 of FIG. 9), the BSs (200 of FIG. 9), a network node, etc. The wireless device may be used in a mobile or fixed place according to a use-example/service.

In FIG. 12, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Portable Device Example to Which Disclosure is Applied**

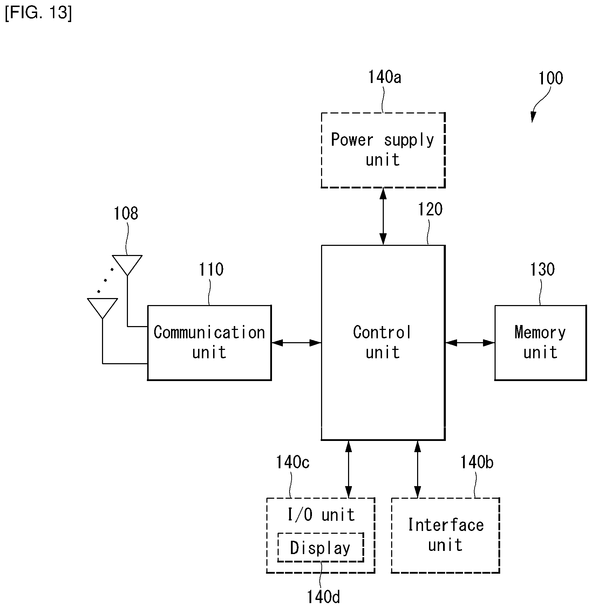

FIG. 13 illustrates a portable device applied to the disclosure. The portable device may include a smart phone, a smart pad, a wearable device (e.g., a smart watch, a smart glass), and a portable computer (e.g., a notebook, etc.). The portable device may be referred to as a Mobile Station (MS), a user terminal (UT), a Mobile Subscriber Station (MSS), a Subscriber Station (SS), an Advanced Mobile Station (AMS), or a Wireless terminal (WT).

Referring to FIG. 213 a portable device 100 may include an antenna unit 108, a communication unit 110, a control unit 120, a memory unit 130, a power supply unit 140a, an interface unit 140b, and an input/output unit 140c. The antenna unit 108 may be configured as a part of the communication unit 110. The blocks 110 to 130/140a to 140c correspond to the blocks 110 to 130/140 of FIG. 12, respectively.

The communication unit 110 may transmit/receive a signal (e.g., data, a control signal, etc.) to/from another wireless device and eNBs. The control unit 120 may perform various operations by controlling components of the portable device 100. The control unit 120 may include an Application Processor (AP). The memory unit 130 may store data/parameters/programs/codes/instructions required for driving the portable device 100. Further, the memory unit 130 may store input/output data/information, etc. The power supply unit 140a may supply power to the portable device 1010 and include a wired/wireless charging circuit, a battery, and the like. The interface unit 140b may support a connection between the portable device 100 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

As one example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

Here, In this case, a wireless communication technology implemented in the wireless device 100, 200 of the present disclosure may include Narrowband Internet of Things for low energy communication in addition to LTE, NR and 6G. In this case, for example, the NB-IoT technology may be an example of a Low Power Wide Area Network (LPWAN) technology, and may be implemented by standards, such as LTE Cat NB1 and/or LTE Cat NB2, and the present disclosure is not limited to the aforementioned names. Additionally or alternatively, a wireless communication technology implemented in a wireless device (100, 200) of the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least any one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, a wireless communication technology implemented in a wireless device (100, 200) of the present disclosure may include at least any one of ZigBee, Bluetooth and a Low Power Wide Area Network (LPWAN) in which low energy communication is considered, and the present disclosure is not limited to the aforementioned names. For example, the ZigBee technology may generate a personal area networks (PAN) related to small/low-power digital communication based on various standards, such as IEEE 802.15.4, and may be called various names.

The embodiments described above are implemented by combinations of components and features of the disclosure in predetermined forms. Each component or feature should be considered selectively unless specified separately. Each component or feature may be carried out without being combined with another component or feature. Moreover, some components and/or features are combined with each other and may implement embodiments of the disclosure. The order of operations described in embodiments of the disclosure may be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the disclosure may be implemented by various means, for example, hardware, firmware, software, or combinations thereof. When embodiments are implemented by hardware, one embodiment of the disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the disclosure may be implemented by modules, procedures, functions, etc. Performing functions or operations described above. Software code may be stored in a memory and may be driven by a processor. The memory is provided inside or outside the processor and may exchange data with the processor by various well-known means.

It is apparent to those skilled in the art that the disclosure may be embodied in other specific forms without departing from essential features of the disclosure. Accordingly, the aforementioned detailed description should not be construed as limiting in all aspects and should be considered as illustrative. The scope of the disclosure should be determined by rational construing of the appended claims, and all modifications within an equivalent scope of the disclosure are included in the scope of the disclosure.

[Industrial Availability]

Although the method of transmitting and receiving data in the wireless communication system supporting half-duplex FDD of the present disclosure has been described in connection with examples in which it applies to 3GPP LTE/LTE-A system and 5G systems (new RAT systems), the method is also applicable to other various wireless communication systems.

**Claims**

1. A method of transmitting and receiving data by a user equipment (UE) in a wireless communication system supporting half-duplex frequency division duplexing, the method comprising:

   receiving configuration information through higher-layer signaling;
   receiving downlink control information (DCI),
   wherein (i) first time duration in which first data is transferred in a first direction, and (ii) second time duration in which second data is transferred in a second direction opposite from the first direction are configured based on at least one of the configuration information or the DCI; and
   performing switching from the first time duration to the second time duration based on that the first direction and the second direction are opposite from each other,
   wherein priorities of the first data and the second data are determined based on a predefined rule, and
   wherein a guard period required for the switching is included in time duration in which data having a lower priority is transferred, among the first time duration or the second time duration.

2. The method of claim 1, wherein the predefined rule is related to a type of information for scheduling the second data,

   wherein the second data is determined to have a higher priority than the first data based on the second data being scheduled by the DCI, and
   wherein the guard period is included in the first time duration.

3. The method of claim 1, wherein the predefined rule is related to at least one type of the first data or the second data.

4. The method of claim 3, wherein the guard period is included in the first time duration based on the second data being a physical random access channel (PRACH) preamble, and
   wherein the first data is not received during the guard period included in the first time duration.

5. The method of claim 3, wherein based on the first data being a synchronization signal block (SSB) and the second data being the PRACH preamble, the guard period is located after a last symbol in which the SSB is received in the first time duration.

6. The method of claim 3, wherein the guard period is included in the second time duration based on the first data being the SSB, and
   wherein the second data is not transmitted before the guard period included in the second time duration after receiving the SSB is terminated.

7. The method of claim 1, wherein the configuration information includes information related to the guard period.

8. The method of claim 7, wherein the guard period is configured i) for each SCS or ii) for each frequency range based on the information related to the guard period.

9. The method of claim 8, wherein a second value which is a guard period corresponding to another SCS is determined based on a first value which is a guard period corresponding to a reference SCS, and
   wherein a ratio of another SCS to the reference SCS is equal to a ratio of the second value to the first value.

10. The method of claim 1, wherein the guard period includes a switching time from the first time duration to the second time duration.

11. The method of claim 10, further comprising:
    transmitting capability information related to the switching time.

12. The method of claim 1, wherein when the first direction is a downlink, the second direction is an uplink, and
    when the first direction is the uplink, the second direction is the downlink.

13. A user equipment (UE) transmitting and receiving data in a wireless communication system supporting half-duplex frequency division duplexing, the UE comprising:

    one or more transceivers;
    one or more processors; and
    one or more memories storing instructions for operations executed by the one or more processors and connected to the one or more processors,
    wherein the operations comprising:

    receiving configuration information through higher-layer signaling;
    receiving downlink control information (DCI),
    wherein (i) first time duration in which first data is transferred in a first direction, and (ii) second time duration in which second data is transferred in a second direction opposite from the first direction are configured based on at least one of the configuration information or the DCI; and
    performing switching from the first time duration to the second time duration based on that the first direction and the second direction are opposite from each other,
    wherein priorities of the first data and the second data are determined based on a predefined rule, and
    wherein a guard period necessary for the switching is included in time duration in which data having a lower priority is transferred, among the first time duration or the second time duration.

14. A device comprising: one or more memories and one or more processors functionally connected to the one or more memories,
    wherein the one or more processors are configured to control the device to:

    receive configuration information through higher-layer signaling;
    receive downlink control information (DCI); and
    wherein (i) first time duration in which first data is transferred in a first direction, and (ii) second time duration in which second data is transferred in a second direction opposite from the first direction are configured based on at least one of the configuration information or the DCI; and
    perform switching from the first time duration to the second time duration based on that the first direction and the second direction are opposite from each other,
    wherein priorities of the first data and the second data are determined based on a predefined rule, and
    wherein a guard period necessary for the switching is included in time duration in which data having a lower priority is transferred, among the first time duration or the second time duration.

15. One or more non-transitory computer-readable media storing one or more instructions, wherein the one or more instructions executable by one or more processors includes instructions for instructing a user equipment (UE) to:

    receive configuration information through higher-layer signaling;
    receive downlink control information (DCI); and

wherein (i) first time duration in which first data is transferred in a first direction, and (ii) second time duration in which second data is transferred in a second direction opposite from the first direction are configured based on at least one of the configuration information or the DCI; and

perform switching from the first time duration to the second time duration based on that the first direction and the second direction are opposite from each other,

wherein priorities of the first data and the second data are determined based on a predefined rule, and

wherein a guard period necessary for the switching is included in time duration in which data having a lower priority is transferred, among the first time duration or the second time duration.

16. A method of transmitting and receiving data by a base station in a wireless communication system supporting half-duplex frequency division duplexing, the method comprising:

transmitting configuration information through higher-layer signaling; and

transmitting downlink control information (DCI),

wherein (i) first time duration in which first data is transferred in a first direction, and (ii) second time duration in which second data is transferred in a second direction opposite from the first direction are configured based on at least one of the configuration information or the DCI; and

switching from the first time duration to the second time duration is performed based on that the first direction and the second direction are opposite from each other,

wherein priorities of the first data and the second data are determined based on a predefined rule, and

wherein a guard period necessary for the switching is included in time duration in which data having a lower priority is transferred, among the first time duration or the second time duration.

17. A base station transmitting and receiving data in a wireless communication system supporting half-duplex frequency division duplexing, the base station comprising:

one or more transceivers;

one or more processors; and

one or more memories storing instructions for operations executed by the one or more processors and connected to the one or more processors,

wherein the operations comprising:

transmitting configuration information through higher-layer signaling; and

transmitting downlink control information (DCI),

wherein (i) first time duration in which first data is transferred in a first direction, and (ii) second time duration in which second data is transferred in a second direction opposite from the first direction are configured based on at least one of the configuration information or the DCI; and

switching from the first time duration to the second time duration is performed based on that the first direction and the second direction are opposite from each other,

wherein priorities of the first data and the second data are determined based on a predefined rule, and

wherein a guard period necessary for the switching is included in time duration in which data having a lower priority is transferred, among the first time duration or the second time duration.

[FIG. 1]

[FIG. 2]

[FIG. 3]

EP 4 195 575 A1

Radio Frame 10ms

Fixed Size

Subframe 1ms

| 0 | 1 | 2 | 3 | 4 | 5 | 6 | 7 | 8 | 9 |

Subframe ={1,2,4} Slots

Size depends on subcarrier spacing

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols - ffs

35

[FIG. 4]

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
-In case of resource grid, $(k, \bar{l})$
-In case of resource block, $(k, l)$

$k = 0$

$l = 0$

$l = 14 \cdot 2^{\mu} - 1$

[FIG. 5]

Antenna Port A ⎫
Antenna Port B ⎬ Numerology X

Antenna Port A ⎫
Antenna Port B ⎬ Numerology Y

[FIG. 6]

EP 4 195 575 A1

INITIAL CELL SEARCH
SYSTEM INFORMATION RECEPTION
RANDOM ACCESS PROCEDURE
GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601  S602  S603  S604  S605  S606  S607  S608

· DL/UL ACK/NACK
· UE CQI/PMI RI REPORT USING PUSCH AND PUCCH

[FIG. 7]

```
         BS                                                UE

                                                    S710
                    UE Capability information
         ◄─────────────────────────────────────────────

                                                    S720
                     Configuration information
         ─────────────────────────────────────────────►

                                                    S730
                               Data
         ◄────────────────────────────────────────────►
```

[FIG. 8]

```
                        ┌─────────────┐
                        │    Start    │
                        └──────┬──────┘
                               │
                               ▼
         ┌──────────────────────────────────────────┐
         │     Receive configuration information     │──S810
         └──────────────────────────────────────────┘
                               │
                               ▼
         ┌──────────────────────────────────────────┐
         │                Receive DCI                │──S820
         └──────────────────────────────────────────┘
                               │
                               ▼
         ┌──────────────────────────────────────────┐
         │   Perform switching from first time       │──S830
         │   duration to second time duration        │
         └──────────────────────────────────────────┘
                               │
                               ▼
                        ┌─────────────┐
                        │     End     │
                        └─────────────┘
```

[FIG. 9]

1

100f

IoT device

400

AI Server /device

100e

Home Appliance

150a

200

300

200

150a

150a

Network (5G)

150a

150a

100d

Hand-held device

100c

XR device

150a

200

200a

200

150a

150a

Robot

100a

Vehicle

150a

200

100b-1

Vehicle

150b

100b-2

[FIG. 10]

108

208

102

100

106

First Device

Processor(s)

Transceiver(s)

Memory(s)

104

206

200

202

Second Device

Transceiver(s)

Processor(s)

Memory(s)

204

[FIG. 11]

[FIG. 12]

[FIG. 13]

## INTERNATIONAL SEARCH REPORT

| International application No. |
| --- |
| **PCT/KR2021/010419** |

| A. | CLASSIFICATION OF SUBJECT MATTER |
| --- | --- |

**H04L 5/16**(2006.01)i; **H04L 5/00**(2006.01)i; **H04L 27/26**(2006.01)i; **H04W 72/04**(2009.01)i; **H04W 88/02**(2009.01)i

According to International Patent Classification (IPC) or to both national classification and IPC

| B. | FIELDS SEARCHED |
| --- | --- |

Minimum documentation searched (classification system followed by classification symbols)

H04L 5/16(2006.01); H04L 5/00(2006.01); H04W 24/08(2009.01); H04W 56/00(2009.01); H04W 72/04(2009.01);
H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 반이중(half-duplex), 주파수 분할 듀플렉싱(frequency division duplexing), 시간
구간(time duration), 스케줄링(scheduling), 우선순위(priority), 보호 기간(guard period), 스위칭(switching)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2015-0327196 A1 (TELEFONAKTIEBOLAGET L M ERICSSON (PUBL)) 12 November 2015 (2015-11-12) See paragraphs [0001], [0006], [0024], [0053], [0073] and [0083]; and figure 1. | 1,3,7-17 |
| A | | 2,4-6 |
| Y | CATT. Discussion on time mask for NR V2X. R4-2003283, 3GPP TSG-RAN WG4 Meeting #94-e-Bis. Electronic Meeting. 10 April 2020. See section 2. | 1,3,7-17 |
| Y | US 2020-0236693 A1 (T-MOBILE USA, INC.) 23 July 2020 (2020-07-23) See claim 10. | 7-9 |
| A | KR 10-2017-0110599 A (QUALCOMM INCORPORATED) 11 October 2017 (2017-10-11) See paragraphs [0116]-[0136]. | 1-17 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 November 2021** | **18 November 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/010419**

**C. DOCUMENTS CONSIDERED TO BE RELEVANT**

| Category* | Citation of document, with indication, where appropriate, of the relevant passages | Relevant to claim No. |
|---|---|---|
| A | KR 10-2016-0102050 A (HUAWEI TECHNOLOGIES CO., LTD.) 26 August 2016 (2016-08-26) See paragraphs [0231]-[0256]. | 1-17 |

**INTERNATIONAL SEARCH REPORT**
Information on patent family members

International application No.

**PCT/KR2021/010419**

| Patent document cited in search report | | | Publication date (day/month/year) | Patent family member(s) | | | Publication date (day/month/year) |
|---|---|---|---|---|---|---|---|
| US | 2015-0327196 | A1 | 12 November 2015 | AR | 100357 | A1 | 28 September 2016 |
| | | | | BR | 112016024783 | A2 | 15 August 2017 |
| | | | | CN | 106465309 | A | 22 February 2017 |
| | | | | CN | 106465309 | B | 05 November 2019 |
| | | | | EP | 3141052 | A1 | 15 March 2017 |
| | | | | EP | 3141052 | B1 | 09 September 2020 |
| | | | | US | 10721340 | B2 | 21 July 2020 |
| | | | | US | 2017-0013095 | A1 | 12 January 2017 |
| | | | | US | 9480036 | B2 | 25 October 2016 |
| | | | | WO | 2015-171032 | A1 | 12 November 2015 |
| US | 2020-0236693 | A1 | 23 July 2020 | WO | 2020-154099 | A1 | 30 July 2020 |
| KR | 10-2017-0110599 | A | 11 October 2017 | BR | 112017016329 | A2 | 03 April 2018 |
| | | | | CN | 107210891 | A | 26 September 2017 |
| | | | | CN | 107210891 | B | 25 August 2020 |
| | | | | EP | 3251275 | A1 | 06 December 2017 |
| | | | | EP | 3251275 | B1 | 06 October 2021 |
| | | | | JP | 2018-510534 | A | 12 April 2018 |
| | | | | JP | 6487053 | B2 | 20 March 2019 |
| | | | | TW | 201631925 | A | 01 September 2016 |
| | | | | TW | I667907 | B | 01 August 2019 |
| | | | | US | 10110363 | B2 | 23 October 2018 |
| | | | | US | 2016-0226650 | A1 | 04 August 2016 |
| | | | | WO | 2016-122845 | A1 | 04 August 2016 |
| KR | 10-2016-0102050 | A | 26 August 2016 | AU | 2014-373468 | A1 | 02 July 2015 |
| | | | | AU | 2014-373468 | B2 | 04 January 2018 |
| | | | | CA | 2935080 | A1 | 02 July 2015 |
| | | | | CN | 104938015 | A | 23 September 2015 |
| | | | | CN | 104938015 | B | 14 April 2020 |
| | | | | CN | 107431610 | A | 01 December 2017 |
| | | | | EP | 3079428 | A1 | 12 October 2016 |
| | | | | EP | 3079428 | B1 | 04 November 2020 |
| | | | | JP | 2017-502601 | A | 19 January 2017 |
| | | | | KR | 10-2013429 | B1 | 21 October 2019 |
| | | | | MX | 2016008502 | A | 09 January 2017 |
| | | | | MX | 359783 | B | 10 October 2018 |
| | | | | US | 10211966 | B2 | 19 February 2019 |
| | | | | US | 2016-0308660 | A1 | 20 October 2016 |
| | | | | WO | 2015-096286 | A1 | 02 July 2015 |

Form PCT/ISA/210 (patent family annex) (July 2019)